(19) Europäisches Patentamt
European Patent Office
Office européen des brevets

(11) **EP 1 579 564 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **03813890.5**

(22) Anmeldetag: **13.12.2003**

(51) Int Cl.:
*H02P 6/16* (2016.01)

(86) Internationale Anmeldenummer:
**PCT/EP2003/014211**

(87) Internationale Veröffentlichungsnummer:
**WO 2004/059830 (15.07.2004 Gazette 2004/29)**

(54) **ROTORSTELLUNGSSENSORANORDNUNG UND VERFAHREN ZUR ERFASSUNG DER ROTORSTELLUNG**

ROTOR-POSITION SENSOR ASSEMBLY AND METHOD FOR DETECTING A ROTOR POSITION

ENSEMBLE DE DETECTION DE LA POSITION D'UN ROTOR ET PROCEDE DE DETECTION DE LA POSITION D'UN ROTOR

(84) Benannte Vertragsstaaten:
**AT BE BG CH CY CZ DE DK EE ES FI FR GB GR HU IE IT LI LU MC NL PT RO SE SI SK TR**

(30) Priorität: **31.12.2002 DE 10261583**

(43) Veröffentlichungstag der Anmeldung:
**28.09.2005 Patentblatt 2005/39**

(73) Patentinhaber: **ebm-papst St. Georgen GmbH & Co. KG**
**78112 St. Georgen (DE)**

(72) Erfinder:
• **HORNBERGER, Jörg**
**72280 Dornstetten (DE)**
• **RAPPENECKER, Hermann**
**78147 Vöhrenbach (DE)**
• **RUDEL, Christian**
**78126 Königsfeld (DE)**
• **SCHREINER, Siegfried**
**78054 Villingen-Schwenningen (DE)**

(74) Vertreter: **Staeger & Sperling Partnerschaftsgesellschaft mbB**
**Sonnenstraße 19**
**80331 München (DE)**

(56) Entgegenhaltungen:
**US-A1- 2002 064 063**

• **PATENT ABSTRACTS OF JAPAN Bd. 2002, Nr. 10, 10. Oktober 2002 (2002-10-10) & JP 2002 165476 A (MATSUSHITA ELECTRIC IND CO LTD), 7. Juni 2002 (2002-06-07) & US 2003/146727 A1 (ISHII SHINJI) 7. August 2003 (2003-08-07)**

**Beschreibung**

Die Erfindung betrifft eine Rotorstellungssensoranordnung und ein Verfahren zur Erfassung der Rotorstellung, insbesondere für einen Außenläufer-Motor.

Die US2002/0064063 A1 zeigt einen Elektromotor mit einem Rotor und einem Schaltkreis zur Erzeugung analoger Signale PD1, PD2 in Abhängigkeit von der Rotorstellung. Die Signale PD1, PD2 werden einem Mikrocomputer zugeführt, der eine A/D-Wandlung der Signale PD1, PD2 durchführt und die Endstufe des Motors steuert.

Aus der US 6,400,109 B1 ist eine Rotorstellungssensoranordnung für einen Außenläufermotor bekannt, bei der die Rotorstellung mit Hilfe von digitalen Hallgeneratoren erfasst wird.

Dabei gibt jeweils der Signalwechsel eines von den digitalen Hallgeneratoren erzeugten Signals an, dass eine bestimmte Rotorstellung im Bereich eines Wechsels des detektierten Magnetfelds erreicht wurde und in welche Richtung der Wechsel stattgefunden hat. Man erhält so an diskreten Rotorstellungen eine Rotorstellungsinformation.

Es ist deshalb eine Aufgabe der Erfindung, eine neue Rotorstellungsanordnung und ein neues Verfahren zur Erfassung der Rotorstellung bereitzustellen.

Nach einem ersten Aspekt der Erfindung wird diese Aufgabe gelöst durch das Verfahren gemäß Patentanspruchs 1.

Die Umwandlung des Rotorstellungssignals in einen digitalen Wert mit einer Auflösung von mindestens 2 Bit ermöglicht es, auch im Inneren des Winkelbereichs eines Sensorpols Informationen aus dem Rotorstellungssignal zu erhalten.

Nach einem weiteren Aspekt der Erfindung wird die Aufgabe gelöst durch einen Elektromotor gemäß Patentanspruch 21.

Die Verwendung eines A/D-Wandlers mit einer Auflösung von mindestens 2 Bit ermöglicht es bei einem Außenrotor, auch im Inneren des Winkelbereichs eines Sensorpols Informationen aus dem Rotorstellungssignal zu erhalten.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1      eine schematische Darstellung eines zweipoligen Rotors eines Innenläufermotors,

Fig. 2      eine schematische Darstellung eines bei einem Rotor nach Fig. 1 gemessenen Rotorstellungssignals,

Fig. 3      eine schematische Darstellung eines zweipoligen Rotors eines Außenläufermotors,

Fig. 4      eine schematische Darstellung eines bei einem Rotor nach Fig. 3 gemessenen Rotorstellungssignals,

Fig. 5      eine schematische Darstellung eines Außenläuferrotors mit einem 28-poligen Sensormagneten,

Fig. 6      eine schematische Darstellung des Außenläuferrotors aus Fig. 5 in abgewickelter Darstellung,

Fig. 7      eine schematische Darstellung eines bei einem Außenläuferrotor nach Fig. 5 gemessenen Rotorstellungssignals,

Fig. 8      eine schematische Darstellung einer Periode eines Rotorstellungssignals,

Fig. 9      eine schematische Darstellung einer Normierung des Rotorstellungssignals gemäß Fig. 8,

Fig. 10     eine schematische Darstellung des Normierungsvorgangs gemäß Fig. 9,

Fig. 11     eine schematische Darstellung eines Normierungsvorgangs mit einer Filterung,

Fig. 12     ein Rotorstellungssignal nach der Normierung,

Fig. 13     eine Darstellung eines Periodenzählers über einen Rotorstellungswinkelbereich,

Fig. 14     eine schematische Darstellung der Rotorstellungssignale und des Wertes PER des zugehörigen Periodenzählers,

Fig. 15     eine schematische Darstellung der Rotorstellungssignale und eines zugehörigen Wertes phi_el,

Fig. 16     eine Darstellung des Wertes phi_el über einen Rotorstellungswinkelbereich,

Fig. 17     eine Darstellung des berechneten Winkels phi_calc

Fig. 18     eine schematische Darstellung eines erfindungsgemäßen Motors,

Fig. 19     einen Aufbau eines Programms zur Steuerung des Motors aus Fig. 18,

Fig. 20     eine Routine MV-INTERRUPT des Programms aus Fig. 19,

Fig. 21     eine Routine CALC_MV_N des Programms aus Fig. 19,

Fig. 22     eine Routine CALC_PER des Programms aus Fig. 19,

Fig. 23     eine Routine SET_MAX/MIN des Programms aus Fig. 19,

Fig. 24     eine Routine CALC_PHI des Programms aus Fig. 19,

Fig. 25     eine Routine COMMUT des Programms aus Fig. 19,

Fig. 26     eine Routine CALC_n des Programms aus Fig. 19,

Fig. 27     eine Routine RGL des Programms aus Fig. 19,

Fig. 28     eine schematische Darstellung eines Außenrotors und eines Rotorstellungssensors, und

Fig. 29     ein von dem Rotorstellungssensor aus Fig. 28 detektiertes Rotorstellungssignal, sowohl für eine digitale als

EP 1 579 564 B1

auch für eine analoge Erfassung.

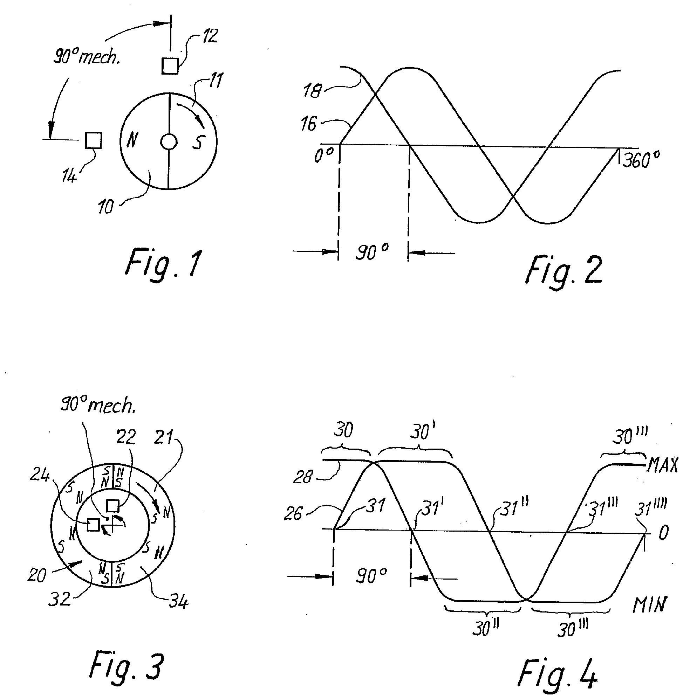

**Fig. 1** zeigt eine schematische Darstellung eines zweipoligen Rotors 10 eines Innenläufermotors mit einem ersten analogen Rotorstellungssensor 12 und einem zweiten, um 90° el. und 90° mech. versetzten analogen Rotorstellungssensor 14.

**Fig. 2** zeigt die von den analogen Rotorstellungssensoren 12 und 14 detektierten Signale 16, 18 bei einer Drehung des Rotors 10 in Richtung des Pfeiles 11. Es ergibt sich ein sinusförmiges Signal 16 von dem Rotorstellungssensor 12 und ein kosinusförmiges Signal 18 von dem Rotorstellungssensor 14.

Aus den Signalen 16 und 18 kann bei jeder Stellung des Rotors 10 und damit zu jedem Zeitpunkt die genaue Stellung des Rotors eindeutig ermittelt werden. Man spricht von einem Absolutwertgeber.

**Fig. 3** zeigt eine schematische Darstellung eines zweipoligen Rotors 20 eines Außenläufermotors, mit einem ersten Magneten 32 (N = Nordpol, S = Südpol) und einem zweiten Magneten 34, mit einem ersten analogen Rotorstellungssensor 22 und einem zweiten, um 90° el. und 90° mech. versetzten analogen Rotorstellungssensor 24.

**Fig. 4** zeigt die von den Rotorstellungssensoren 22 und 24 detektierten Signale 26, 28 bei einer Drehung des Rotors 20 in Richtung des Pfeiles 21. Sowohl das Signal 26 von dem Rotorstellungssensor 22 als auch das Signal 28 des Rotorstellungssensors 24 sind aufgrund der Form der Außenläufermagneten 32, 34 in den Bereichen 30, 30', 30", 30''', 30'''', im Folgenden 30 genannt, um ihr Maximum MAX und Minimum MIN abgeflacht ("trapezförmige Magnetisierung"), so dass in diesen Bereichen 30 die Bestimmung der Rotorstellung schwierig bzw. im Extremfall unmöglich ist. Daher werden üblicherweise digitale Hallgeneratoren verwendet, welche ein Signal liefern, das üblicherweise zwischen einem Potential HIGH (z.B. +5 V) und einem Potential LOW (z.B. 0 V) wechselt, und es werden die Wechsel detektiert, welche an den Nulldurchgängen 31, 31', 31", 31''', 31'''' der Signale 26, 28 stattfinden.

Die Form der Signale 26, 28 weist flache Bereiche 30 auf, da beispielsweise bei der Darstellung gemäß Fig. 3 der Rotorstellungssensor 24 in den benachbarten Rotorstellungsbereichen eine ähnlich große Menge an permanentmagnetischem Material des Pols 32 "sieht", während sich bei dem Rotorstellungssensor 14 bei der Darstellung gemäß Fig. 1 eine maximale Menge an in die gleiche Richtung magnetisiertem permanentmagnetischem Material in dessen Nähe befindet, und diese Menge bei einer weiteren Drehung abnimmt.

Durch Verwendung einer sinusförmigen Magnetisierung würde das Rotorstellungssignal mehr einer Sinusform gleichen. Ein Motor mit sinusförmiger Magnetisierung kann jedoch nur weniger Leistung liefern als ein Motor mit trapezförmiger Magnetisierung.

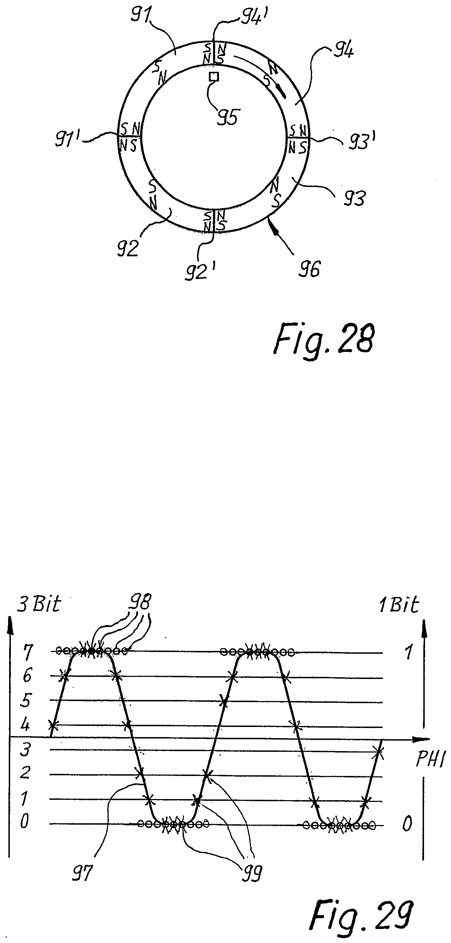

**Fig. 28** zeigt eine schematische Darstellung eines Außenrotors 96 und eines Rotorstellungssensors 95, und **Fig. 29** zeigt das von dem Rotorstellungssensor 95 detektierte Rotorstellungssignal, sowohl für eine digitale als auch für eine analoge Erfassung.

Der Außenrotor 96 aus Fig. 28 weist vier Pole 91, 92, 93 und 94 auf, zwischen denen sich jeweils eine Pollücke 91', 92', 93' und 94' befindet. Der Rotorstellungssensor 95 detektiert die Stellung des Rotors 96, und das entsprechende Rotorstellungssignal bei einer vollständigen Erfassung ist als Linie 97 in Fig. 29 dargestellt.

Wird ein digitaler Rotorstellungssensor 95 und/oder ein A/D-Wandler mit einer Auflösung von 1 Bit verwendet, so ergeben sich die in Fig. 29 mit einem Kreis dargestellten Messpunkte 98, welche entweder den Wert 0 oder den Wert 1 haben. Diese Messpunkte 98 geben nur im Bereich der Pollücken 91', 92', 93' und 94' eine Information über die aktuelle Rotorstellung, da im Inneren des Winkelbereichs eines der Pole 91, 92, 93 und 94 der Messwert entweder ständig 0 oder ständig 1 ist.

Wird dagegen ein analoger Rotorstellungssensor 95 und ein A/D-Wandler mit einer Auflösung von mindestens 2 Bit verwendet, so ergeben sich die in Fig. 29 mit einem Kreuz dargestellten Messpunkte 99, welche das Rotorstellungssignal - je nach Auflösung des A/D-Wandlers - wesentlich genauer wiedergeben. Die Messpunkte 99 nehmen auch im Inneren des Winkelbereichs eines Pols 91, 92, 93 und 94 unterschiedliche digitale Werte an, so dass auch in diesen Bereichen die Drehstellung des Rotors 96 ermittelt werden kann. Das Ausführungsbeispiel zeigt die Verwendung eines 3 Bit A/D-Wandlers, welcher die acht Werte 0 .. 7 ausgeben kann.

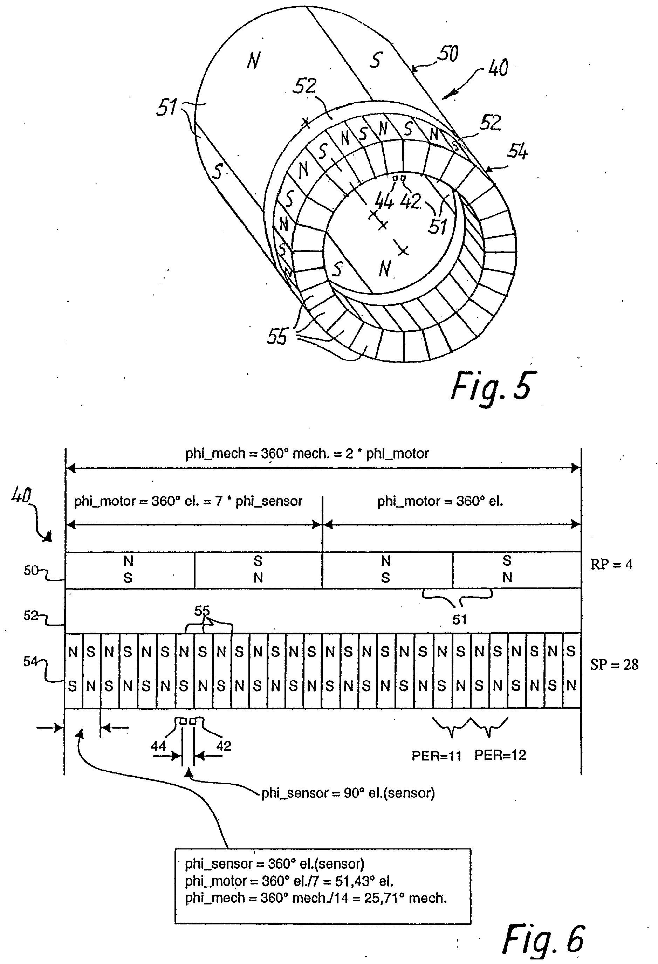

**Fig. 5** zeigt eine schematische Darstellung eines Rotors 40 eines Außenläufermotors, und **Fig. 6** zeigt den Rotor 40 in abgewickelter Darstellung. Dieser hat einen vierpoligen Antriebsmagnet 50 mit Polen 51, einen unmagnetisierten Bereich 52 und einen 28-poligen Sensormagnet 54 mit Polen 55, einen ersten analogen Rotorstellungssensor 42 und einen zweiten, um 90° el.(sensor) versetzten analogen Rotorstellungssensor 44, welche Rotorstellungssensoren 42, 44 dem Sensormagneten 54 zugeordnet sind. Der Sensormagnet hat 14 Polpaare, und damit entsprechen 360° el.(sensor) einem mechanischen Winkel von 360° mech./14 ≈ 25,71° mech. Ein elektrischer Winkel von 90° el.(sensor) entspricht somit einem mechanischen Winkel von ca. 25,71° mech./4 ≈ 6,43° mech.

Die Rotorstellungssensoren 42, 44 können ebenfalls um einen Winkel n * 180° el. (sens.) + 90 ° el. (sens.) mit n = 1, 2, 3, ... versetzt sein, wobei für n = 1, 3, 5 etc. das Vorzeichen des Rotorstellungssignal umgedreht ist.

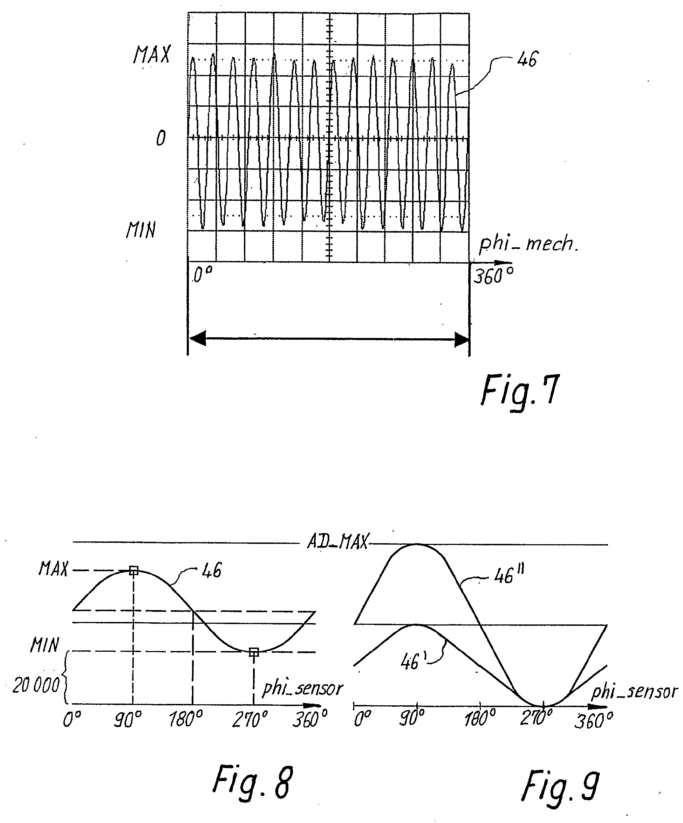

**Fig. 7** zeigt eine Messung des von dem Rotorstellungssensor 42 detektierten Signals 46. Das Signal 46 ist aufgrund der großen Polzahl sinusförmig und weist 14 Maxima MAX und 14 Minima MIN pro Umdrehung (360 °mech.) des Rotors 40 auf. Das kosinusförmige Signal 48 des Rotorstellungssensors 44 ist aus Gründen der Übersichtlichkeit

3

nicht dargestellt.

Der unmagnetisierte Bereich 52 aus Fig. 5 und Fig. 6 bewirkt einen größeren Abstand zwischen dem Antriebsmagneten 50 und dem Sensormagneten 54. Die Signale 46, 48 werden dadurch weniger durch das Magnetfeld des Antriebsmagneten 50 gestört, und dies ermöglicht eine genauere Detektion.

Bevorzugt werden der Antriebsmagnet 50 und der Sensormagnet 54 einstückig gefertigt. Dies geschieht beispielsweise durch gleichzeitiges Aufmagnetisieren der Pole 51 des Antriebsmagneten 50 und der Pole 55 des Sensormagneten 54 auf ein magnetisches Material. Insbesondere bei kleinen Motoren kann die unmagnetisierte Zone 52 auch entfallen.

Bevorzugt findet bei jedem Übergang von Nord nach Süd (N -> S) des Antriebsmagneten 51 auch ein Übergang von Nord nach Süd des Sensormagneten 54 statt, so dass die Signale 46, 48 durch die Überlagerung der Magnetfelder im Bereich des jeweiligen Nulldurchgangs nicht geschwächt werden.

Dies wird erreicht, indem der Sensormagnet 54 im Bereich jedes Pols des Antriebsmagneten 50 eine ungerade Anzahl von Polen, z.B. 1, 3, 5, 7 aufweist.

Bei einem vierpoligen Antriebsmagneten 50 (Rotorpole = RP = 4) kann der Sensormagnet 54 beispielsweise 4 * 7 = 28 Sensorpole (SP = 28) oder 4 * 5 = 20 Sensorpole (SP = 20) aufweisen, oder allgemein

$$SP = (2n - 1) * RP \text{ mit } n = 1, 2, 3, ...$$

Dabei wird das Rotorstellungssignal auch bei einer trapezförmigen Magnetisierung auf Grund der großen Polzahl sinusförmig, so dass eine gute Messung möglich ist.

**Normierung der Signale**

Die gemessenen Signale 46, 48, vgl. Fig. 7, weisen auf Grund vielseitiger Einflüsse keine perfekte Sinus-/Kosinusform auf. Die Abweichungen entstehen beispielsweise durch mechanische Exzentritäten und Fertigungstoleranzen, Überlagerung anderer Magnetfelder, durch Wärme hervorgerufene Schwächung des Sensormagnetfelds und Ausdehnung des Rotors 40, sowie durch bei hohen Drehzahlen entstehende Signalverminderungen durch Begrenzungen der Sensoreigenschaften.

Diese Abweichungen führen zu Fehlern bei der Berechnung des Rotorstellungswinkels phi. Daher wird eine Normierung der Signale 46, 48 durchgeführt.

Fig. 8 zeigt eine Periode (360° el.(sensor)) des sinusförmigen Signals 46 aus Fig. 7 nach der Erfassung durch einen A/D-Wandler, also als Folge von digitalen Werten.

Fig. 9 zeigt das sinusförmige Signal 46' nach einem ersten Schritt der Normierung und das sinusförmige Signal 46" nach einem zweiten Schritt der Normierung.

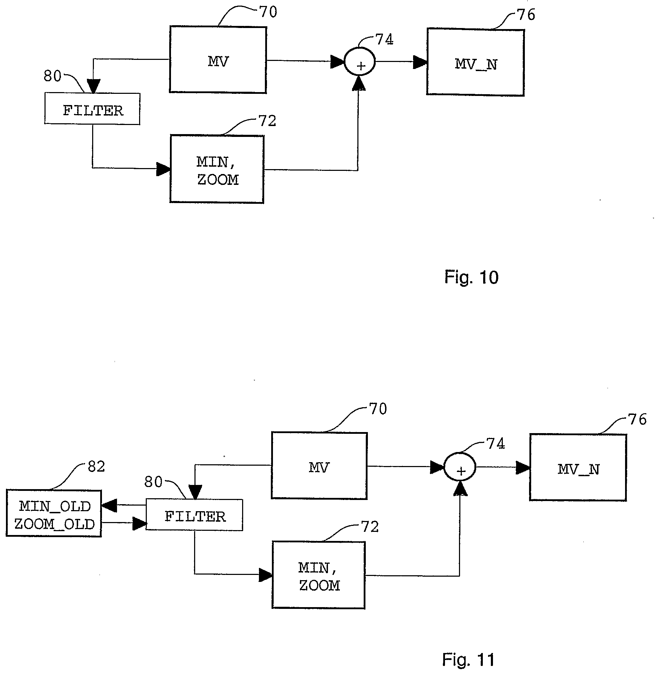

Fig. 10 zeigt schematisch die Normierungsvorrichtung für den Normierungsvorgang aus Fig. 9.

Bei jeder Umdrehung des Rotors 40 werden Messwerte MV für jede Periode des sinusförmigen Signals 46 in einer Erfassungsvorrichtung 70 erfasst. In einem Filter FILTER 80 wird aus den Messwerten MV das Maximum MAX und das Minimum MIN ermittelt, und in einer Korrekturwertvorrichtung 72 werden sowohl das Minimum MIN als auch ein Wert ZOOM = AD_MAX / (MAX - MIN) gespeichert, wobei AD_MAX der maximale Wert des A/D-Wandlers ist. Bei einem 16-Bit A/D-Wandler ist der Wert AD_MAX = 65.535, bei einem 10-Bit A/D-Wandler ist AD_MAX = 1023.

Bei einer nachfolgenden Umdrehung des Rotors 40 wird für jeden Messwert MV des sinusförmigen Signals 46 in einer Berechnungsvorrichtung 74 die folgende Normierung durchgeführt.

$$MV\_N := (MV - MIN) \cdot ZOOM$$

Das Abziehen des Wertes MIN eliminiert den Gleichspannungsoffset (DC-Offset) 60 und führt zu der Kurve 46' in Fig. 9.

Die anschließende Multiplikation mit dem Wert ZOOM führt zu einer Streckung der Kurve 46' und ist als Kurve 46" dargestellt. Durch diese Streckung wird zum einen eine Normierung der Amplituden erreicht, und zum anderen wird der volle Wertebereich 0 .. DIGITAL_MAX des verwendeten digitalen Zahlenformates genutzt. Dies ermöglicht es auch, für die Auflösung des A/D-Wandlers einen geringeren Wert als für die Auflösung des verwendeten digitalen Zahlenformats zu wählen.

Beispiel zur Normierung:

Bei der vorhergehenden Umdrehung des Rotors 40 wurden in der entsprechenden Periode die Werte MIN = 20.000 und MAX = 40.000 ermittelt. Daraus ergibt sich bei einem 16-Bit A/D-Wandler mit AD_MAX = 65.535 und einem 16-Bit Zahlenformat mit DIGITAL_MAX = 65.535 ein Wert ZOOM = 65.535 / 20.000 = 3,27675.

In der nachfolgenden Umdrehung des Rotors 40 führt die Normierung zu den folgenden Ergebnissen:

MV = 20.000 wird zu MV_N = 0
MV = 40.000 wird zu MV_N = 65.535
MV = 19800 wird zu MV_N = 0 (- 655)
MV = 41.000 wird zu MV_N = 65.535 (68.812)
MV = 30.000 wird zu MV_N = 32768

Wie aus den Ergebnissen ersichtlich ist, werden Werte, die außerhalb des Wertebereichs 0 .. AD_MAX bzw. 0 .. DIGITAL_MAX liegen, auf diesen begrenzt. Mit dem kosinusförmigen Signal 48 wird die gleiche Normierung durchgeführt (nicht dargestellt). Es wird somit beispielsweise für die Normierung bei dem in dem Ausführungsbeispiel dargestellten 28-poligen Sensormagneten 54 die folgende Anzahl an Speicherplätzen benötigt:

$$14 \text{ (Anzahl Sensorpole)} \cdot 2 \text{ (MIN und ZOOM)} \cdot 2 \text{ (kosinusförmiges und sinusförmiges Signal)} = 56 \text{ Speicherplätze}$$

Bevorzugt findet das Speichern der Korrekturwerte MIN und ZOOM fortdauernd statt, da beispielsweise durch Temperaturschwankungen Änderungen der Signale 46 und 48 auftreten können.

**Fig. 11** zeigt schematisch eine bevorzugte Ausführungsform der Normierungsvorrichtung aus Fig. 10.

Bei dieser Normierungsvorrichtung findet in dem Filter FILTER 80 jeweils eine Mittelwertbildung über die vorhergehenden Korrekturwerte MIN und ZOOM statt, indem z.B.

$$MIN = 0{,}9 \cdot MIN\_OLD + 0{,}1 \cdot MIN$$

als neuer Wert MIN und

$$ZOOM = 0{,}9 \cdot ZOOM\_OLD + 0{,}1 \cdot ZOOM$$

als neuer Wert ZOOM gespeichert werden. Bevorzugt werden die Werte ZOOM_OLD und MIN_OLD beim Start mit einem vorgegebenen Wert initialisiert.

Die Werte MIN_OLD und ZOOM_OLD werden jeweils in einer Speichervorrichtung 82 zwischengespeichert. Durch die Mittelung wird die Auswirkung von stark abweichenden Messwerten gemindert.

Alternativ kann auch eine Mittelung der Werte MIN und MAX stattfinden, aus denen auch der Korrekturwert ZOOM berechnet wird.

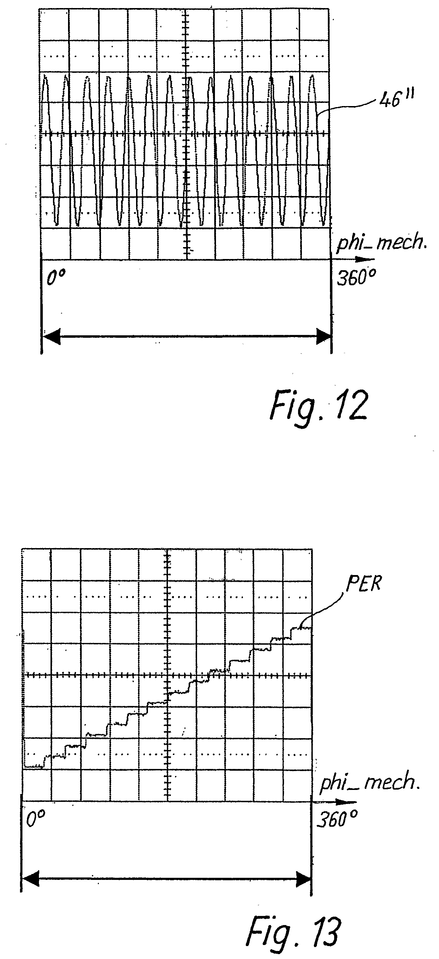

**Fig. 12** zeigt das Signal 46'', welches aus der Normierung des Signals 46 hervorgegangen ist und auf einem Oszilloskop ausgegeben wurde. Der DC-Offset und die vertikale Lage des Signals sind durch die Einstellung des Oszilloskops entstanden. Alle Amplituden haben auf Grund der durchgeführten Normierung die annähernd gleiche Höhe.

**Berechnung des Rotorstellungswinkels phi**

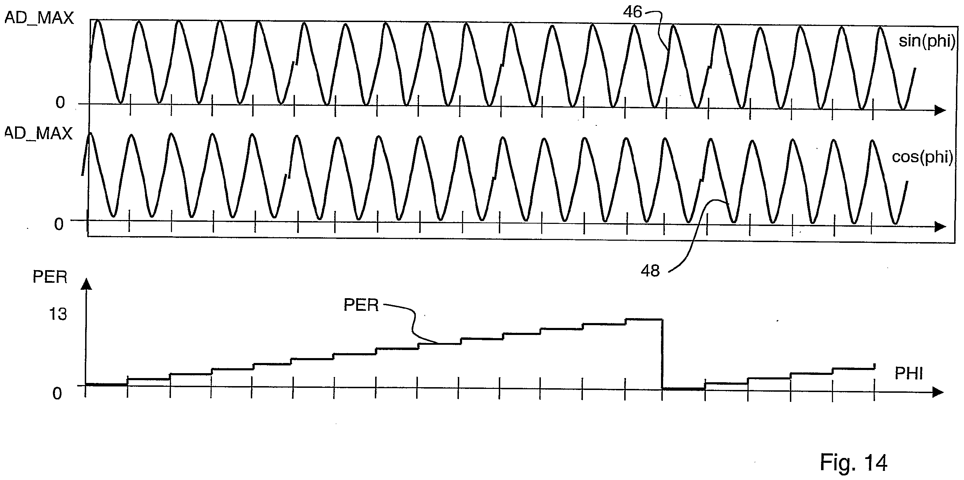

**Fig. 13** zeigt eine Darstellung des Werts PER, welcher auf einem Oszilloskop ausgegeben wurde, und **Fig. 14** zeigt schematisch die Erfassung der einzelnen Perioden des sinusförmigen Signals 46 und des kosinusförmigen Signals 48 mittels eines Periodenzählers PER.

Das sinusförmige Signal 46 und das kosinusförmige Signal 48 des in dem Ausführungsbeispiel dargestellten 28-poligen Sensormagneten 54 durchlaufen pro Umdrehung (360° mech.) des Rotors 40 14 Perioden, also 14 mal 360 °el.(sensor), vgl. Fig. 6. Bei jeder Periode wird der Periodenzähler PER um 1 erhöht wird, und nach 14 Erhöhungen wird er wieder auf den niedrigsten Wert zurückgesetzt. Er durchläuft somit die Werte 0, 1, 2, 3, ... 12, 13, 0, ....

Die Erhöhung des Periodenzählers PER erfolgt jeweils, wenn das sinusförmige Signal 46 einen "Nulldurchgang" hat (ungefähr bei AD_MAX/2, vgl. Fig. 9), und das kosinusförmige Signal 48 ein Maximum hat (ungefähr bei dem Wert AD_MAX), vgl. Fig. 14. Es ergibt sich ein stufenförmiges Signal PER, welches nach jeweils 14 Stufen wieder mit dem niedrigsten Wert anfängt.

Die Darstellung des Werts PER, welcher auf einem Oszilloskop ausgegeben wurde, zeigt eine Treppenform, und der berechnete Rotorstellungswinkel phi_calc beträgt an den Sprüngen des Werts PER jeweils genau

$$\text{phi\_calc} = \text{PER} * (360°/14) = \text{PER} \cdot (360°/\text{SP})$$

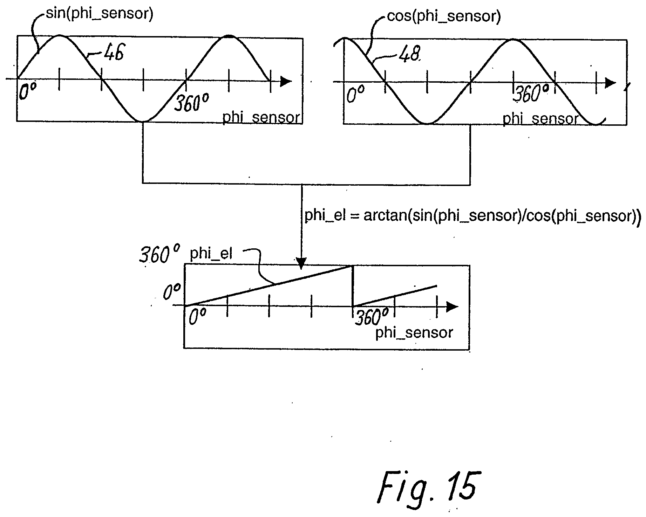

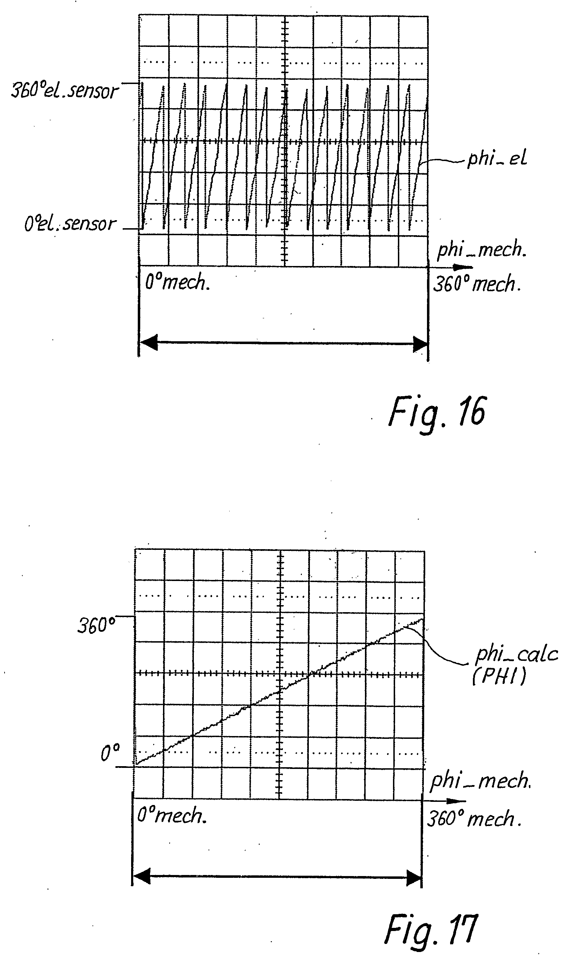

**Fig. 15** zeigt schematisch die Berechnung eines Wertes phi_el aus dem sinusförmigen Rotorstellungssignal 46 und dem kosinusförmigen Rotorstellungssignal 48, und **Fig. 16** zeigt eine Darstellung des Wertes phi_el, welcher auf einem Oszilloskop ausgegeben wurde, für eine Umdrehung des Rotors 40.

Der genaue Winkel PHI zwischen den Sprüngen des Werts PER lässt sich aus dem sinusförmigen Signal 46, also MV_SIN = sin (phi), und dem kosinusförmigen Signal 48, also MV_COS = cos (phi), vgl. Fig. 8 und Fig. 9, berechnen. Es gilt

$$\text{phi\_el} \quad := \arctan (\sin(\text{phi\_sensor}) / \cos(\text{phi\_sensor}))$$

$$= \arctan (\text{MV\_SIN}/\text{MV\_COS})$$

Der berechnete Winkel phi_el durchläuft insgesamt 14 mal den Wertebereich 0° bis 360° el.(sensor), da der Rotor 40 einen Sensormagnet 54 mit 14 Polpaaren aufweist.

Alternativ kann auch ein einziger Rotorstellungssensor 42 verwendet werden. Da jedoch jeder Wert zweimal vorkommen kann und damit nicht eindeutig ist, müssen in diesem Fall die vergangenen Rotorstellungssignale berücksichtigt werden, um die Eindeutigkeit wieder herzustellen.

**Fig. 17** zeigt eine Darstellung des berechneten Rotorstellungswinkels phi_calc, welcher auf einem Oszilloskop ausgegeben wurde.

Der berechnete Rotorstellungswinkel phi_calc ergibt sich zu

$$\text{phi\_calc} = \text{PER} * (360°/14) + \text{phi\_el}/14$$

bzw. allgemein zu

$$\text{phi} = \text{PER} * (360°/\text{SP}) + \arctan (\text{MV\_SIN}/\text{MV\_COS})/\text{SP}$$

Es kann also zu jeder Rotorstellung durch Zählen der Perioden des Rotorstellungssignals (bzw. der Rotorstellungssignale) und zusätzliche Auswertung der in dem Rotorstellungssignal (bzw. den Rotorstellungssignalen) enthaltenen Winkelinformation der genaue Rotorstellungswinkel phi berechnet werden, und man erhält einen Absolutmesswertgeber für einen Motor mit einem Außenläufer-Sensormagneten.

Dies wäre mit digitalen Hallgeneratoren nicht möglich, da bei diesen nur bei bestimmten Motorstellungen ein Wechsel der Rotorstellungssignale auftritt und zwischen diesen Wechseln aus den Rotorstellungssignalen keine weitere Information abgeleitet werden kann.

Um bei Motoren, die in beide Drehrichtungen laufen können, eine Messung in beide Drehrichtungen zu ermöglichen, kann die Drehrichtung aus der Differenz phi_el - phi_el_OLD des aktuell ermittelten Winkels phi_el und des in der vorhergehenden Messung ermittelten Winkels phi_el_OLD ermittelt werden. Es ist darauf zu achten, dass diese Ermittlung nicht zum Zeitpunkt eines Sprungs von 360 °el. nach 0 °el. bzw. umgekehrt stattfindet.

Ist das Vorzeichen der Differenz positiv, so läuft der Motor in die "positive" Richtung. Die Berechnung des Periodenzählers PER erfolgt wie oben ausgeführt.

Ist das Vorzeichen der Differenz jedoch negativ, so läuft der Motor in "negativer" Richtung. Um weiterhin den korrekten Rotorstellungswinkel zu ermitteln, wird der Periodenzähler bei negativer Drehrichtung an den Stellen, an denen er bei positiver Drehrichtung inkrementiert wird, stattdessen dekrementiert. Die Berechnung des Rotorstellungswinkels phi_calc ist identisch.

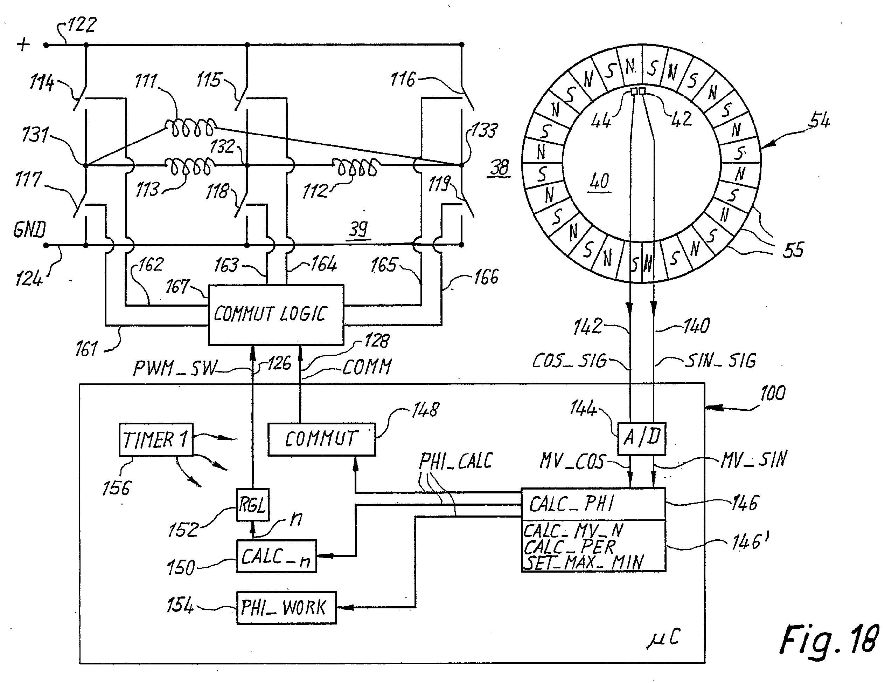

**Fig. 18** zeigt einen erfindungsgemäßen Motor 38 mit einem Stator 39, einem Rotor 40 und einem Mikroprozessor oder Mikrocontroller μC 100.

Der Stator 39 weist drei Wicklungsanschlüsse 131, 132, 133 auf, welche jeweils über einen oberen Transistor 114, 115 und 116 mit einer Plusleitung 122 und jeweils über einen unteren Transistor 117, 118 und 119 mit einer Masseleitung GND 124 verbunden sind. Drei Wicklungen 111, 112 und 113 sind zwischen jeweils zwei Wicklungsanschlüssen 131, 132 und 133 geschaltet.

Die oberen Transistoren 114, 115 und 116 und die unteren Transistoren 117, 118 und 119 sind über Steuerleitungen 161, 162, 163, 164, 165 und 166 mit einer Kommutierungslogik COMMUT LOGIC 167 verbunden.

Der Rotor 40 weist einen Sensormagnet 54 mit 28 Polen 55, einen ersten Rotorstellungssensor 42 und einen zweiten Rotorstellungssensor 44 auf, vgl. Fig. 5 und Fig. 6. Die Rotorstellungssensoren 42, 44 sind über Leitungen 140, 142 mit dem $\mu$C 100 verbunden.

Der $\mu$C 100 weist einen Timer TIMER1 156, einen A/D-Wandler A/D 144, eine Rotorstellungsberechnungsanordnung CALC_PHI 146 mit Hilfsanordnungen 146' (CALC_MV_N, CALC_PER, SET_MAX/MIN), eine Kommutierungsvorrichtung COMMUT 148, eine Drehzahlberechnungsanordnung CALC_n 150, einen Regler RGL 152 und eine Rotorstellungswinkelverwertungsanordnung PHI_WORK 154 auf.

Die Kommutierungsanordnung COMMUT 148 gibt über eine oder mehrere Leitungen 128 einen Wert COMM an die Kommutierungslogik COMMUT LOGIC 167 aus. Der Wert COMM 128 wird in Abhängigkeit von dem berechneten Winkel PHLCALC bestimmt.

Abhängig von diesem Wert COMM bestimmt die Kommutierungslogik COMMUT LOGIC 167, welche der oberen Transistoren 114, 115 und 116 und der unteren Transistoren 117, 118 und 119 geöffnet und welche geschlossen werden.

So können die Wicklungen 111, 112 und 113 in beide Richtungen bestromt werden. Man spricht von einer Vollbrückenschaltung.

Um die Höhe des durch die Wicklungen 111, 112 und 113 fließenden Stroms steuern oder regeln zu können, werden die gemäß dem Signal COMM 128 zu schließenden oberen Transistoren 114, 115 und 116 bzw. die unteren Transistoren 117, 118 und 119 über ein getaktetes Signal angesteuert. Hierzu wird der Kommutierungslogik COMMUT LOGIC 167 zusätzlich zu dem Signal COMM 128 über den Regler RGL 152 ein Wert PWM_SW über eine Leitung 126 zugeführt. Das Signal PWM_SW wird von dem Regler 152 berechnet, und es steuert das Tastverhältnis.

Durch die Bestromung des Stators 39 wird der Rotor 40 angetrieben, und die Rotorstellungssensoren 42, 44, welche in der Nähe des Sensormagneten 54 angeordnet sind, erzeugen analoge Rotorstellungssignale SIN_SIG und COS_SIG, welche über die Leitungen 140, 142 an den A/D-Wandler A/D 144 übertragen werden.

Der A/D-Wandler A/D 144 wandelt die Signale SIN_SIG und COS_SIG in digitale Werte MV_SIN und MV_COS mit einer Auflösung von mindestens zwei Bit um.

Die Werte MV_SIN und MV_COS werden der Rotorstellungsberechnungsanordnung CALC_PHI 146 zugeführt, welche daraus mit Hilfe der Hilfsanordnung 146' einen Absolutwert PHI_CALC berechnet, welcher der momentanen Rotorstellung entspricht.

Der berechnete Absolutwert PHLCALC wird der Kommutierungsanordnung COMMUT 148 zur Bestimmung des Kommutierungszeitpunkts, der Drehzahlberechnungsanordnung CALC_n 150 zur Bestimmung der Drehzahl n und der Rotorstellungswinkelverwertungsanordnung PHI_WORK 154 für eine weitere Verwertung des berechneten Winkels PHLCALC zugeführt.

Die Drehzahlberechnungsanordnung CALC_n 150 berechnet die Drehzahl n des Rotors 40, und der Wert n wird dem Regler 152 zugeführt, der daraus einen Stellwert PWM_SW berechnet. Der Stellwert PWM_SW wird über die Leitung 126 an die Kommutierungslogik COMMUT LOGIC 167 ausgegeben und bestimmt das Tastverhältnis der Taktung für die oberen Transistoren 114, 115 und 116 und die unteren Transistoren 117, 118 und 119.

In der Anordnung PHI_WORK 154 werden weitere Aufgaben ausgeführt, welche den Absolutwert PHLCALC benötigen.

Der Timer TIMER1 156 steuert beispielsweise durch Interrupts den jeweiligen Zeitpunkt für die A/D-Wandlung mit dem A/D-Wandler A/D 144.

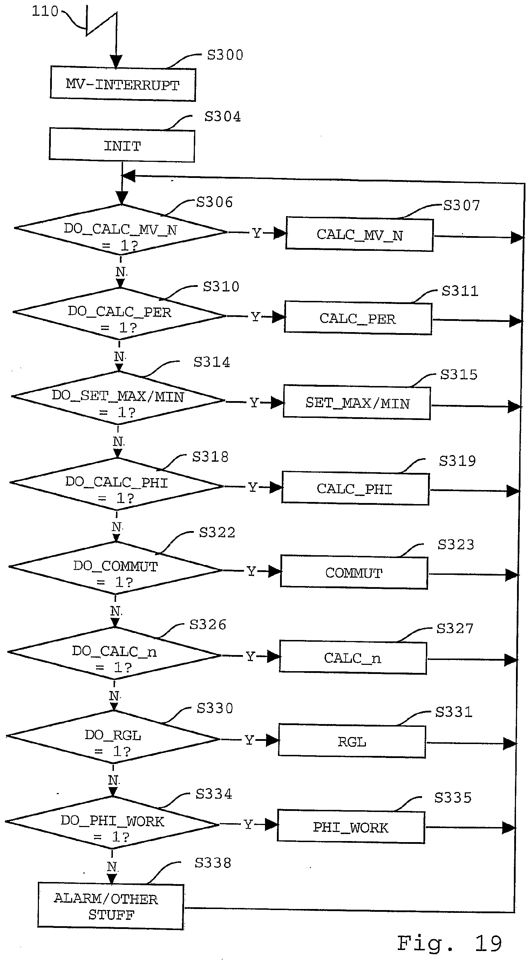

**Fig. 19** zeigt den Aufbau des in dem $\mu$C 100 ablaufenden Programms.

Das Programm enthält eine Interruptroutine MV-INTERRUPT S300, welche z.B. alle 100 $\mu$s durch einen Interrupt 110 aufgerufen wird, also in regelmäßigen, vorgegebenen Abständen.

In S304 erfolgt eine Initialisierung, bei der beispielsweise die Variablen initialisiert werden. Weiterhin werden die Wicklungen 111, 112 und/oder 113 mit einem vorgegebenen Bestromungsmuster bestromt, damit der Rotor 40 in einen definierten Ausgangszustand gedreht wird. Bei einem vierpoligen Rotormagneten 50 sind jeweils zwei um 180° mech. versetzte Stellungen magnetisch gleichwertig, so dass hier der Ausgangszustand entweder der einen oder der anderen Rotorstellung entspricht.

Alternativ kann der Sensormagnet eine Markierung aufweisen, um die Rotorstellung zuordnen zu können. Würde diese anfängliche Bestromung nicht erfolgen, so wüsste man zwar den relativen Drehwinkel, jedoch nicht den absoluten elektrischen Winkel des Rotormagneten 50, welcher zur Kommutierung notwendig ist.

Daraufhin beginnt eine Hauptschleife bei S306. In S306 wird ein Flag DO_CALC_MV_N abgefragt, und falls es gleich 1 ist (Y = Yes), wird eine Routine CALC_MV_N S307 aufgerufen und danach zu dem Beginn S306 der Hauptschleife zurückgesprungen.

In gleicher Weise wird in S310 überprüft, ob die Routine CALC_PER S311 angefordert wurde, in S314, ob die Routine SET_MAX/MIN S315 angefordert wurde, in S318, ob die Routine CALC_PHI S319 angefordert wurde, in S322, ob die Routine COMMUT S323 angefordert wurde, in S326, ob die Routine CALC_n S327 angefordert wurde, in S330, ob die Routine RGL S331 angefordert wurde, in S334, ob die Routine PHI-WORK S335, angefordert wurde, und in S338 werden schließlich eine Routine ALARM und weitere für den Betrieb des Motors erforderliche Routinen ausgeführt.

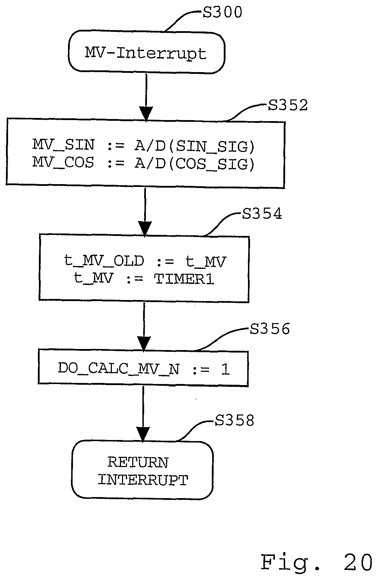

Fig. 20 zeigt die Interrupt-Routine MV-INTERRUPT S300, welche beispielsweise alle 100 $\mu$s durch den Interrupt 110 aufgerufen wird, vgl. Fig. 19.

Die Routine MV-INTERRUPT S300 erfasst sowohl die Signale SIN_SIG 140 und COS_SIG 142, vgl. Fig. 18, als auch die momentane Zeit.

In S352 werden über den A/D-Wandler 144 die momentanen Werte der Signale SIN_SIG 140 und COS_SIG 142 eingelesen und den Variablen MV_SIN und MV_COS zugeordnet.

In S354 wird der Wert der Variablen t_MV der letzten Messung der Variablen t_MV_OLD zugeordnet, so dass er für weitere Berechnungen zur Verfügung steht. Der momentane Wert aus dem Timer TIMER1 144 wird ausgelesen und in der Variablen t_MV gespeichert.

In S356 wird die Variable DO_CALC_MV_N auf 1 gesetzt und dadurch die Routine CALC_MV_N S307 angefordert.

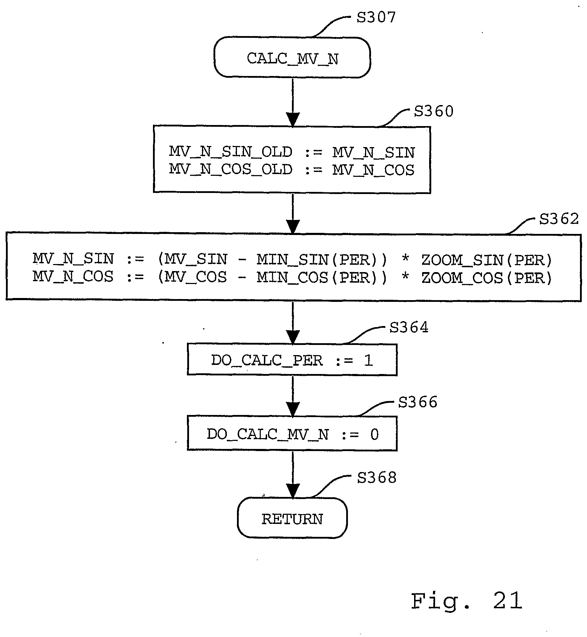

Fig. 21 zeigt die Routine CALC_MV_N S307, welche eine Normierung der Messwerte durchführt.

In S360 werden die Werte der Variablen MV_N_SIN und MV_N_COS in den Variablen MV_N_SIN_OLD und MV_N_COS_OLD für weitere Berechnungen gespeichert.

In S362 wird eine Normierung durchgeführt, vgl. Beschreibung zu Fig. 8 und Fig. 9. Hierzu sind für jeden Wert des Periodenzählers PER eine Variable MIN_SIN(PER), ZOOM_SIN(PER), MIN_COS(PER), ZOOM_COS(PER) gespeichert. Die Ergebnisse der Normierungen werden in den Variablen MV_N_SIN und MV_N_COS gespeichert.

In S364 wird die Routine CALC_PER S311 durch Setzen von DO_CALC_PER auf 1 angefordert, und in S366 wird die Variable DO_CALC_MV_N auf 0 zurückgesetzt.

Die Routine CALC_MV_N S307 wird in S368 verlassen.

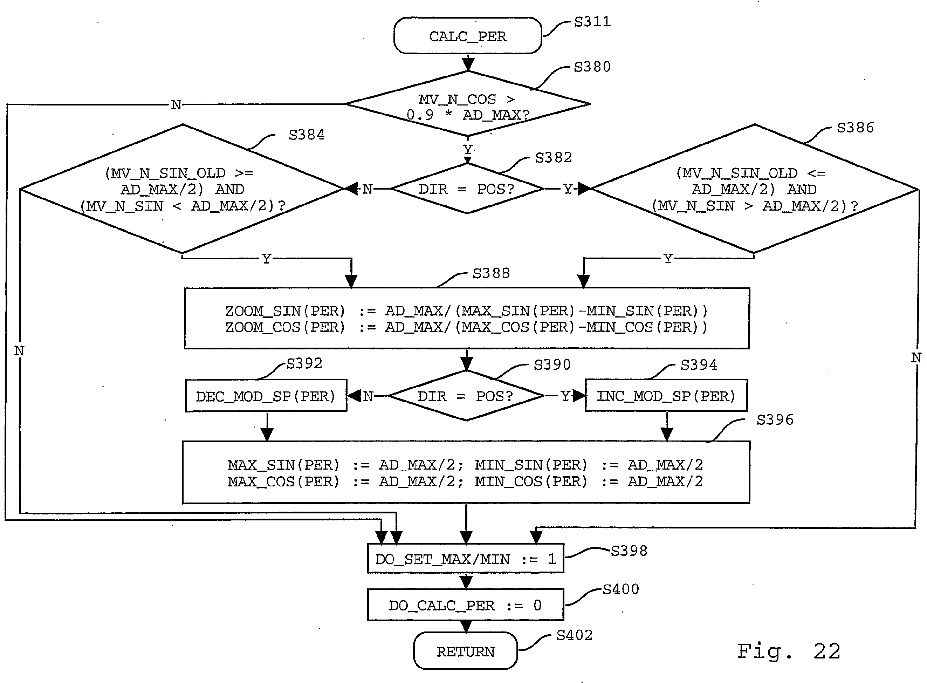

Fig. 22 zeigt die Routine CALC_PER S311, welche bestimmt, in welcher Periode sich der Rotor 40 (Fig. 18) befindet, und welche bei einem Periodenwechsel die notwendigen Schritte ausführt.

In S380 wird überprüft, ob die Variable MV_N_COS größer als 0,9 * AD_MAX ist, ob also das Signal COS_SIG nahe seinem Maximum ist, vgl. Beschreibung zu Fig. 12.

Falls Ja (Y), wird in S382 die Drehrichtung DIR des Rotors 40 überprüft. Ist diese negativ, so wird in S384 überprüft, ob der alte normierte Messwert MV_N_SIN_OLD größer oder gleich dem Wert AD_MAX/2 war und der aktuelle normierte Messwert MV_N_SIN kleiner als der Wert AD_MAX/2 ist. Dies entspricht einer Prüfung, ob das Signal SIN_SIG 140 einen Nulldurchgang von dem positiven in den negativen Bereich hat, vgl. Beschreibung zu Fig. 12.

Falls Ja, so hat ein Periodenwechsel stattgefunden, und es wird nach S388 gesprungen. Falls Nein, so hat kein Periodenwechsel stattgefunden, und es wird nach S398 gesprungen.

Bei einer positiven (POS) Drehrichtung DIR des Rotors 40 wird in S386 in gleicher Weise überprüft, ob das Signal SIN_SIG 140 einen Nulldurchgang von dem negativen in den positiven Bereich hat, vgl. Beschreibung zu Fig. 12.

Falls Ja, so hat ein Periodenwechsel stattgefunden, und es wird nach S388 gesprungen. Falls Nein, so hat kein Periodenwechsel stattgefunden, und es wird nach S398 gesprungen.

In S388, also nach einem Periodenwechsel, werden die Werte der Variablen ZOOM-SIN(PER) und ZOOM_COS(PER) der letzten Periode auf den neu berechneten Wert gesetzt, vgl. Beschreibung zu Fig. 8 und Fig. 9.

In S392 bzw. S394 erfolgt je nach Drehrichtung DIR des Rotors 40 eine Dekrementierung des Werts der Variablen PER mit der Routine DEC_MOD_SP bzw. eine Inkrementierung des Werts der Variablen PER mit der Routine INC_MOD_SP.

Die Routine DEC_MOD_SP vermindert den Wert der Variablen PER unter Berücksichtigung der Modulofunktion von SP. Bei mehrfachem Aufruf von DEC_MOD_SP und einer Sensorpolzahl SP = 14 durchläuft PER somit beispielsweise die Werte 4, 3, 2, 1, 0, 13, 12, ..., 1, 0, 13 ... .

In gleicher Weise durchläuft PER bei mehrfachem Aufruf von INC_MOD_SP mit SP = 14 die Werte 12, 13, 0, 1, 2, ..., 12, 13, 0, ....

Somit gibt der Wert (PER * 360°/SP) bei beiden Drehrichtungen genau den Rotorstellungswinkel phi zum Zeitpunkt des Periodenwechsels an.

In S396 werden die Variablen MAX_SIN(PER), MIN_SIN(PER), MAX_COS(PER), MIN_COS(PER) auf den mittleren Wert AD_MAX/2 zurückgesetzt, um für die neue Periode die maximalen und minimalen Werte neu bestimmen zu können.

In S398 wird die Routine SET_MAX/MIN S315 durch Setzen von DO_SET_MAX/MIN auf 1 angefordert und in S400 die Anforderung von CALC_PER S311 zurückgesetzt.

In S402 wird die Routine CALC_PER S311 verlassen.

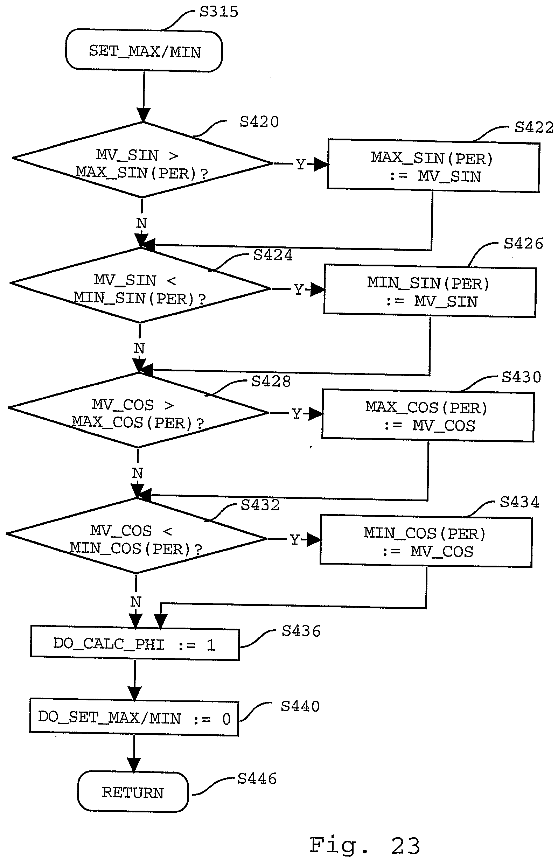

**Fig. 23** zeigt die Routine SET_MAX_MIN S315, welche die maximalen und minimalen Werte der Messwerte MV_SIN und MV_COS bestimmt und speichert.

In S420 wird überprüft, ob der Messwert MV_SIN größer als der Wert MAX_SIN(PER), dem in dieser Periode PER bisher maximalen Wert MV_SIN, ist. Falls Ja, so wird in S422 MAX_SIN(PER) auf den Wert MV_SIN gesetzt.

In S424 wird überprüft, ob der Messwert MV_SIN kleiner als der Wert MIN_SIN(PER), dem in dieser Periode PER bisher minimalen Wert MV_SIN, ist. Falls Ja, so wird in S426 MIN_SIN(PER) auf den Wert MV_SIN gesetzt.

In den Schritten S428, S430, S432, S434 geschieht in gleicher Weise ein Setzen der Werte MAX_COS(PER) und MIN_COS(PER).

In S436 wird DO_CALC_PHI auf 1 (Anforderung) gesetzt, und in S440 wird das Anforderungsflag DO_SET_MAX/MIN zurückgesetzt.

In S446 wird die Routine verlassen.

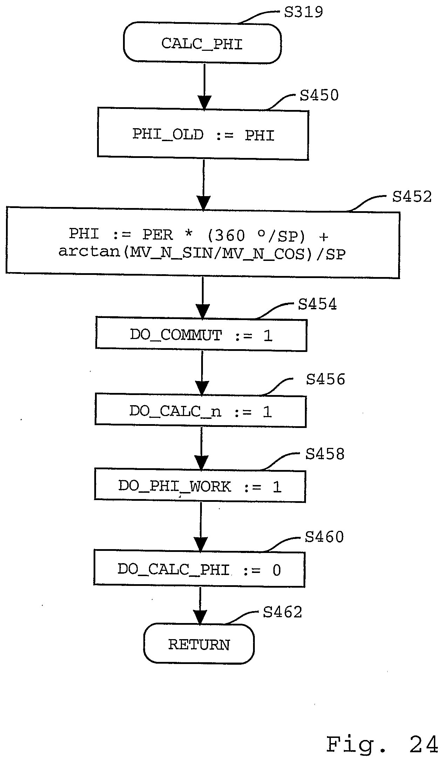

**Fig. 24** zeigt die Routine CALC_PHI S319, welche den Rotorstellungswinkel phi berechnet.

In S450 wird der Wert der Variablen PHI für weitere Berechnungen in der Variablen PHI_OLD gespeichert.

In S452 wird der Rotorstellungswinkel phi berechnet und in der Variablen PHI gespeichert, vgl. Beschreibung zu Fig. 14. Die Berechnung der arctan-Funktion kann dabei auch durch das Auslesen aus einer Tabelle ersetzt werden, die beispielsweise jedem Paar (MV_N_SIN, MV_N_COS) einen Funktionswert zuordnet.

In S454, S456 und S458 werden die Routinen COMMUT S323, CALC_n S331 und PHI_WORK S331 durch Setzen der entsprechenden Anforderungsflags angefordert.

In S460 wird das Anforderungsflag DO_CALC_PHI zurückgesetzt, und die Routine wird in S462 verlassen.

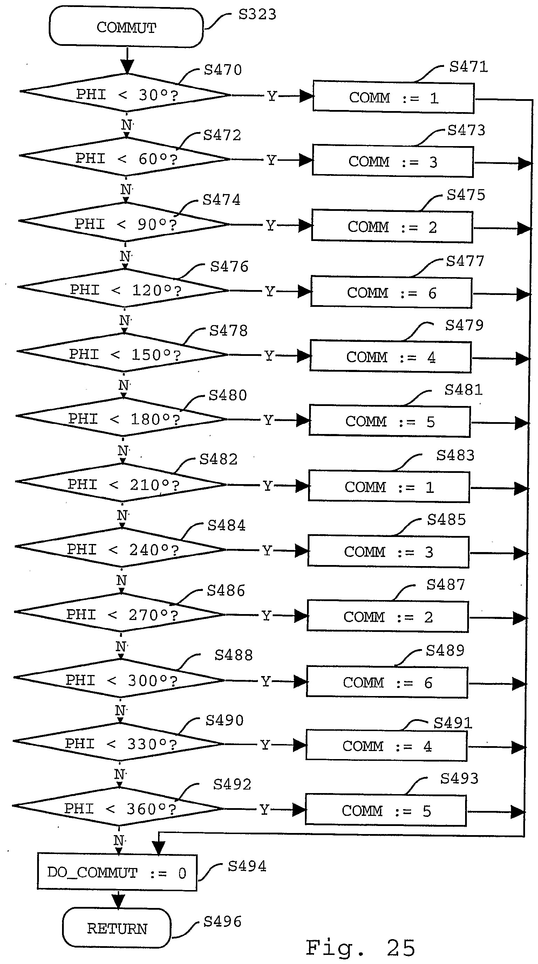

**Fig. 25** zeigt die Routine COMMUT S323, welche in Abhängigkeit von dem berechneten mechanischen Rotorstellungswinkel PHI für einen vierpoligen Rotormagnet 50 bestimmt, welche der Phasen 111, 112 und/oder 113 eines dreiphasigen Stators 39 bestromt wird, vgl. Fig. 18.

In S470 wird überprüft, ob der Wert PHI kleiner als 30° ist. Falls Ja, wird die Variable COMM auf den Wert 1 gesetzt. Dieser entspricht dem für den Winkelbereich 0° <= PHI < 30° erforderlichen Kommutierungsmuster, und über die Kommutierungslogik COMMUT LOGIC 167 werden die entsprechenden Phasen 111, 112 und/oder 113 bestromt.

In gleicher Weise wird in den Schritten S472 bis S493 in 30°-Winkelabständen das Kommutierungsmuster COMM auf den erforderlichen Wert gesetzt.

Die Kommutierung erfordert auf Grund des zu jedem Zeitpunkt die Rotorstellung wiedergebenden Wertes PHI keine Zeitmessung, wie sie bei einem Motor ohne Absolutwertgeber notwendig wäre.

Im S494 wird das Anforderungsflag DO_COMMUT zurückgesetzt, und die Routine wird in S496 verlassen.

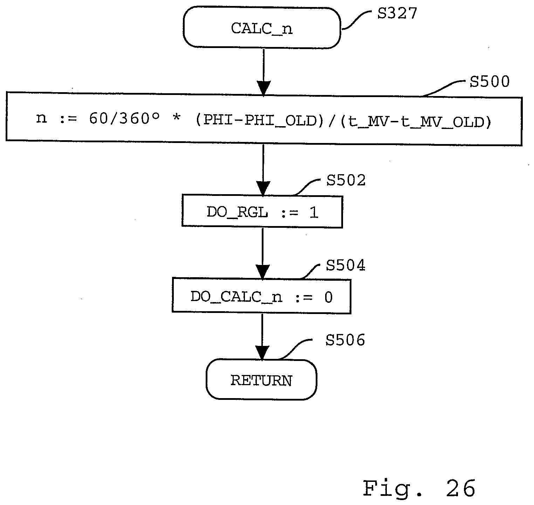

**Fig. 26** zeigt die Routine CALC_n S327, welche die Drehzahl n des Motors berechnet.

In S500 wird die Drehzahl n berechnet. Es gilt

$$n = 60/360° * (PHI - PHI\_OLD)/(t\_MV - t\_MV\_OLD)$$

Die Drehzahl n ist proportional zu dem Quotienten aus der Winkeldifferenz des Winkels PHI zum Messzeitpunkt t_MV und dem Winkel PHI_OLD zum Messzeitpunkt t_MV_OLD und der Zeitdifferenz des Messzeitpunkts t_MV der momentanen Messung und des Messzeitpunkts t_MV_OLD der vorhergehenden Messung. Der Faktor 60/360° bestimmt die Einheit U/min.

Wird die Messung in festen Zeitabständen ausgeführt, so ist der Wert t_MV - t_MV_OLD konstant und kann durch eine Konstante ersetzt werden, vgl. Interrupt 110 in Fig. 19.

Der obige Zusammenhang ergibt sich aus

$$n = 60/(2*Pi) \; w = 60/(2*Pi) \; d/dt \; PHI(t)$$

wobei w die Winkelgeschwindigkeit ist und PHI im Bogenmaß anzugeben ist.

Der Wert PHI kann in dem gesamten Programm wahlweise als Winkelwert, im Bogenmaß oder in einer anderen eindeutig zuordenbaren Form angegeben werden.

In S502 wird die Reglerroutine RGL durch Setzen des Anforderungsflags auf 1 angefordert.

In S504 wird das Anforderungsflag der Routine CALC_n zurückgesetzt und in S506 die Routine CALC_n verlassen.

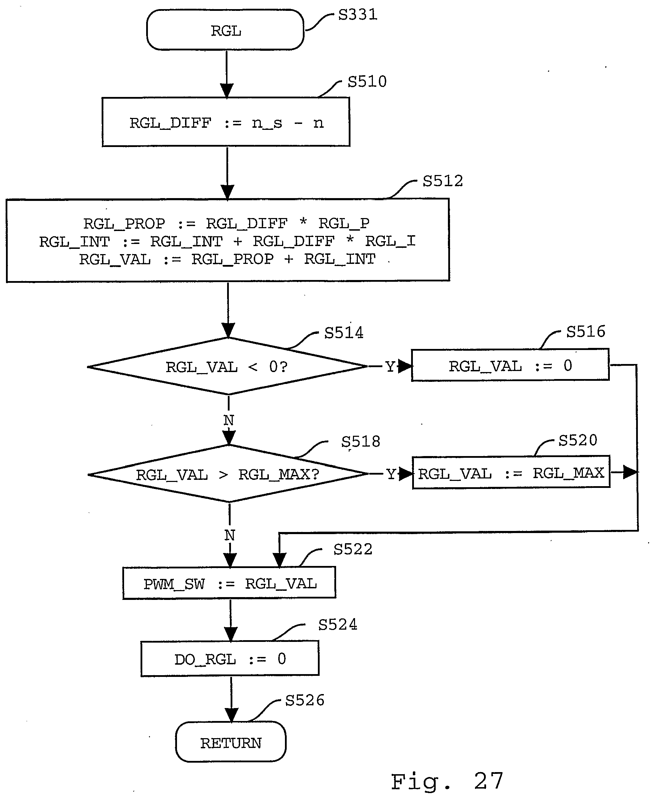

**Fig. 27** zeigt die Routine RGL S331, welche den Stellwert PMW_SW für die Einstellung des erforderlichen Tastverhältnisses berechnet, vgl. Fig. 18.

In S510 wird die Regeldifferenz RGL_DIFF aus der Differenz zwischen dem Sollwert n_s und dem Istwert n berechnet.

In S512 wird die Stellgröße RGL_VAL mit einem üblichen PI-Regler mit dem Proportionalanteil RGL_PROP und dem Integralanteil RGL_INT berechnet. Die Höhe der Anteile wird durch die Faktoren RGL_P und RGL_I bestimmt. Die Gleichungen für die Berechnung von RGL_PROP und RGL_INT sind angegeben.

In S514 wird überprüft, ob die Stellgröße RGL_VAL kleiner als 0 ist. Falls Ja, wird sie in S516 auf das kleinstmögliche Tastverhältnis 0 gesetzt.

Im S518 wird überprüft, ob die Stellgröße RGL_VAL größer als RGL_MAX ist. Falls Ja, wird sie in S520 auf das größtmögliche Tastverhältnis RGL_MAX gesetzt.

In S522 wird die Stellgröße RGL_VAL dem Ausgabewert PWM_SW zugeordnet, welcher das Tastverhältnis und damit die Höhe des Wicklungsstroms bestimmt.

In S524 wird das Anforderungsflag der Routine RGL zurückgesetzt und in S526 die Routine RGL verlassen.

Naturgemäß sind im Rahmen der vorliegenden Erfindung vielfache Abwandlungen und Modifikationen möglich.

**Patentansprüche**

1. Verfahren zum Betreiben eines Elektromotors, welcher aufweist:

   einen Stator (39),
   einen Außenrotor (40), welcher Außenrotor (40) einen Sensormagnet (54) mit einer Mehrzahl SP von Sensorpolen (55) und einen mit dem Stator (39) in Wechselwirkung stehenden Rotormagneten (50) mit einer Mehrzahl RP von Rotorpolen aufweist, wobei RP < SP ist, und wobei für die Anzahl SP der Sensorpole gilt:

$$SP = (2n - 1) * RP \text{ mit } n = 2, 3, 4, \ldots,$$

   mindestens einen mit dem Stator verbundenen Rotorstellungssensor (42, 44), und eine Rotorstellungsauswertungsvorrichtung (100),
   welches Verfahren folgende Schritte aufweist:

   A) Mit dem mindestens einen Rotorstellungssensor (100) wird mindestens ein von der Drehstellung des Sensormagneten (54) abhängiges Rotorstellungssignal erzeugt;
   B) das mindestens eine Rotorstellungssignal wird der Rotorstellungsauswertungsvorrichtung (100) zugeführt;
   C) das mindestens eine Rotorstellungssignal wird in der Rotorstellungsauswertungsvorrichtung (100) in mindestens einen digitalen Wert mit einer Auflösung von mindestens 2 Bit umgewandelt, wodurch das mindestens eine Rotorstellungssignal auch bei Drehstellungen im Inneren des Winkelbereichs eines Sensorpols in unterschiedliche digitale Werte umgewandelt werden kann.

2. Verfahren nach Anspruch 1,
   bei welchem das mindestens eine Rotorstellungssignal als analoges Rotorstellungssignal erzeugt wird.

3. Verfahren nach Anspruch 1 oder 2,
   bei welchem das mindestens eine Rotorstellungssignal in der Rotorstellungsauswertungsvorrichtung (100) in mindestens einen digitalen Wert mit einer Auflösung von mindestens 4 Bit umgewandelt wird.

4. Verfahren nach einem der vorhergehenden Ansprüche,
   bei welchem das mindestens eine Rotorstellungssignal in der Rotorstellungsauswertungsvorrichtung (100) in mindestens einen digitalen Wert mit einer Auflösung von mindestens 8 Bit umgewandelt wird.

5. Verfahren nach einem der vorhergehenden Ansprüche,
   welches zusätzlich folgenden Schritt aufweist:
   A1) Der Schritt A wird ständig ausgeführt.

6. Verfahren nach einem der vorhergehenden Ansprüche,
   welches zusätzlich folgenden Schritt aufweist:
   B1) Der Schritt B wird ständig ausgeführt.

**7.** Verfahren nach einem der vorhergehenden Ansprüche,
welches zusätzlich folgenden Schritt aufweist:
C1) Der Schritt C) wird in zeitlichen Abständen wiederholt.

**8.** Verfahren nach Anspruch 8,
welches zusätzlich folgenden Schritt aufweist:
C2) Der Schritt C) wird in festen zeitlichen Abständen wiederholt.

**9.** Verfahren nach einem der Ansprüche 7 oder 8,
welches zusätzlich folgenden Schritt aufweist:
C3) Der mindestens eine digitale Wert wird auf einen Wert innerhalb eines vorgegebenen Wertebereich umgesetzt.

**10.** Verfahren nach Anspruch 9,
welches zusätzlich folgenden Schritt aufweist:
C4) Für die Normierung aus Schritt C3) wird jeweils in einer vorhergehenden Umdrehung des Außenrotors 40 mindestens ein Korrekturwert ermittelt und gespeichert.

**11.** Verfahren nach Anspruch 10,
welches zusätzlich folgenden Schritt aufweist:
C5) In Schritt C4) wird aus dem aktuellen Korrekturwert und mindestens einem vorhergehenden Korrekturwert ein Mittelwert gebildet.

**12.** Verfahren nach einem der vorhergehenden Ansprüche,
welches zusätzlich folgenden Schritt aufweist:
D) Aus dem mindestens einen digitalen Wert wird die Drehstellung des Außenrotors (40) berechnet.

**13.** Verfahren nach Anspruch 12,
welches zusätzlich folgenden Schritt aufweist:
D1) In Schritt D) wird mittels des mindestens einen digitalen Werts die Anzahl der Perioden erfasst, die zumindest eines der Rotorstellungssignale durchlaufen hat.

**14.** Verfahren nach Anspruch 13,
welches zusätzlich folgenden Schritt aufweist:
D2) In Schritt D1) wird nach der Erfassung einer vorgegebenen Zahl von Perioden die Periodenzahl auf einen vorgegebenen Wert zurückgesetzt.

**15.** Verfahren nach Anspruch 13 oder 14,
welches zusätzlich folgenden Schritt aufweist:
D3) Mittels der ermittelten Anzahl der Perioden und des mindestens einen digitalen Werts wird die Drehstellung des Außenrotors (40) berechnet.

**16.** Verfahren nach einem der Ansprüche 12 bis 15 für einen Elektromotor, dessen Sensormagnet zwei Rotorstellungssensoren (42, 44) zugeordnet sind, welches zusätzlich folgenden Schritt aufweist:
D4) In Schritt D) werden zur Berechnung der Drehstellung des Außenrotors (40) die digitalisierten Werte beider Rotorstellungssensoren verwendet.

**17.** Verfahren nach einem der Ansprüche 12 bis 16,
welches zusätzlich folgenden Schritt aufweist:
E) Aus der berechneten Drehstellung des Außenrotors zu einem ersten Zeitpunkt und der berechneten Drehstellung des Außenrotors zu einem zweiten Zeitpunkt wird die Drehzahl des Außenrotors ermittelt.

**18.** Verfahren nach einem der vorhergehenden Ansprüche,
welches zusätzlich folgenden Schritt aufweist:
F) Aus der zeitlichen Änderung des mindestens einen digitalen Werts wird die Drehrichtung des Außenrotors (40) ermittelt.

**19.** Verfahren nach einem der vorhergehenden Ansprüche,
welches zusätzlich folgenden Schritt aufweist:

G) Beim Start des Elektromotors wird der Außenrotor (40) in eine definierte Ausgangsstellung gebracht.

20. Verfahren nach Anspruch 19, bei welchem der Außenrotor (40) beim Start durch eine Bestromung des Stators (39) in die definierte Ausgangsstellung gebracht wird.

21. Elektromotor, welcher aufweist:
Einen Stator (39),
einen Außenrotor (40),
welcher Außenrotor (40) einen Sensormagnet (54) mit einer Mehrzahl SP von Sensorpolen (55) und einen mit dem Stator (39) in Wechselwirkung stehenden Rotormagneten (50) mit einer Mehrzahl RP von Rotorpolen aufweist, wobei RP < SP ist, und wobei für die Anzahl SP der Sensorpole gilt:

$$SP = (2n - 1) * RP \text{ mit } n = 2, 3, 4, ...,$$

mindestens einem Rotorstellungssensor (42, 44) zur Erzeugung eines Rotorstellungssignals (140, 142),
eine Rotorstellungsauswertungsvorrichtung (100) zur Erzeugung eines Absolutwerts für die Rotorstellung, welche einen A/D-Wandler (144) mit einer Auflösung von mindestens 2 Bit aufweist,
wobei der mindestens eine Rotorstellungssensor (42, 44) mit dem A/D-Wandler (144) verbunden ist.

22. Elektromotor nach Anspruch 21,
bei welchem der mindestens eine Rotorstellungssensor (42, 44) als analoger Rotorstellungssensor ausgebildet ist.

23. Elektromotor nach Anspruch 21 oder 22,
bei welchem die Rotorstellungsauswertungsvorrichtung (100) als Absolutwertgeber (100) für die Rotorstellung ausgebildet ist, welcher zu jedem Zeitpunkt durch eine Auswertung des Rotorstellungssignals die Position des Rotors anzeigen kann.

24. Elektromotor nach einem der Ansprüche 21 bis 23,
wobei der A/D-Wandler (144) eine Auflösung von mindestens 4 Bit aufweist.

25. Elektromotor nach einem der Ansprüche 21 bis 24,
wobei der A/D-Wandler (144) eine Auflösung von mindestens 8 Bit aufweist.

26. Elektromotor nach einem der Ansprüche 21 bis 25,
mit einem Mikroprozessor (100), welcher zumindest einen Teil der Rotorstellungsauswertungsvorrichtung (100) bildet.

27. Elektromotor nach einem der Ansprüche 21 bis 26,
bei welchem der mindestens eine Rotorstellungssensor (42, 44) auf der radial inneren Seite des Sensormagneten (54) angeordnet ist.

28. Elektromotor nach einem der Ansprüche 21 bis 27,
welcher zwei Rotorstellungssensoren (42, 44) aufweist, welche in einem Abstand von n * 180° el. + 90° el. mit n = 0, 1, 2, 3, 4, ... angeordnet sind.

29. Elektromotor nach einem der Ansprüche 21 bis 28, wobei der Sensormagnet eine Sensorpolanzahl SP >= 10 aufweist.

30. Elektromotor nach einem der Ansprüche 21 bis 29, wobei der Rotormagnet (50) eine trapezförmige Magnetisierung aufweist.

31. Elektromotor nach einem der Ansprüche 21 bis 30,
wobei der Außenrotor (40) einen nichtmagnetisierten Bereich (52) zwischen dem Rotormagneten (50) und dem Sensormagneten (54) aufweist.

32. Elektromotor nach einem der Ansprüche 21 bis 31, wobei n >= 3 ist.

**33.** Elektromotor nach einem der Ansprüche 21 bis 32, wobei n >= 4 ist.

**34.** Elektromotor nach einem der Ansprüche 21 bis 33,
wobei der Außenrotor derart ausgebildet ist, dass der Sensormagnet (54) an den Winkelstellen, an denen der Rotormagnet (50) einen Wechsel der Magnetfeldrichtung aufweist, ebenfalls einen Wechsel der Magnetfeldrichtung aufweist.

**35.** Elektromotor nach Anspruch 34,
wobei an diesen Winkelstellen der Wechsel der Magnetfeldrichtung sowohl beim Sensormagneten (54) als auch beim Rotormagneten (50) in die gleiche Richtung erfolgt.

**36.** Elektromotor nach einem der Ansprüche 21 bis 35,
wobei der Rotormagnet (50) und der Sensormagnet (54) einstückig ausgebildet sind.

**Claims**

**1.** Method for operating an electric motor, comprising:

a stator (39),
an outer rotor (40), which outer rotor (49) has a sensor magnet (54) having a plurality SP of sensor poles (55) and a rotor magnet (50) having a plurality RP of rotor poles, being in interaction with the stator (39), wherein RP is smaller than SP, and wherein the number SP of the sensor poles applies to:

$$SP = (2n - 1) * RP \text{ with } n = 2, 3, 4, \ldots,$$

at least one rotor-position sensor (42, 44) being connected to the stator,
and a rotor-position evaluation device (100),
the method comprising the following steps:

A) With the at least one rotor-position sensor (100) at least one rotor-position signal depending on the rotational position of the sensor magnet (54) is created;
B) the at least one rotor-position signal is supplied to the rotor-position evaluation device (100);
C) the at least one rotor-position signal is converted into at least one digital value having a resolution of at least 2 Bit in the rotor-position evaluation device (100), whereby the at least one rotor-position signal can be converted in different digital values even with rotational positions in the inner of the angular range.

**2.** Method according to claim 1,
wherein the at least one rotor-position signal is created as analog rotor-position signal.

**3.** Method according to claim 1 or 2,
wherein the at least one rotor-position signal is converted into at least one digital value having a resolution of at least 4 Bit in the rotor-position evaluation device (100).

**4.** Method according to one of the preceding claims,
wherein the at least one rotor-position signal is converted into at least one digital value having a resolution of at least 8 Bit in the rotor-position evaluation device (100).

**5.** Method according to one of the preceding claims,
further comprising the following step:
A1) the step A is performed continuously.

**6.** Method according to one of the preceding claims,
further comprising the following step:
B1) the step B is performed continuously.

**7.** Method according to one of the preceding claims,
further comprising the following step:
C1) the step C) is performed in intervals.

**8.** Method according to claim 8,
further comprising the following step:
C2) the step C) is repeated in determined intervals.

**9.** Method according to claim 7 or 8,
further comprising the following step:
C3) the at least one digital value is transferred to a value within a predetermined range of values.

**10.** Method according to claim 9,
further comprising the following step:
C4) for the scaling of step C3) at least a correction value is determined and saved respectively in a previous rotation of the outer rotor 40.

**11.** Method according to claim 10,
further comprising the following step:
C5) in step C4) an average value is generated from the actual correction value and at least one previous correction value.

**12.** Method according to one of the preceding claims,
further comprising the following step:
D) from the at least one digital value the rotational position of the outer rotor (40) is calculated.

**13.** Method according to claim 12,
further comprising the following step:
D1) in step D) the amount of periods passed at least one of the rotor-position signals is measured using the at least one digital value.

**14.** Method according to claim 13,
further comprising the following step:
D2) in step D1) the number of periods is reset to a predetermined value after measuring a predetermined number of periods.

**15.** Method according to claim 13 or 14,
further comprising the following step:
D3) using the determined amount of periods and of at least one digital value the rotational position of the outer rotor (40) is calculated.

**16.** Method according to one of the claims 12 to 15 for an electric motor, whose sensor magnet is associated with two rotor-position sensors (42, 44), further comprising the following step:
D4) in step D) the digitalized values of both rotor-position sensors are used for calculating the rotational position of the outer rotor (40).

**17.** Method according to claim 12 or 16,
further comprising the following step:
E) From the calculated rotational position of the outer rotor at a first instant of time and the calculated rotational position of the outer rotor at a second instant of time the rotational speed of the rotor is determined.

**18.** Method according to one of the preceding claims,
further comprising the following step:
F) from the periodic change of the at least one digital value the rotation direction of the outer rotor (40) is determined.

**19.** Method according to one of the preceding claims,
further comprising the following step:
G) when starting the electric motor the outer rotor (40) is brought into a defined starting position.

**20.** Method according to claim 19, wherein the outer rotor (40) is brought into a defined starting position when starting by a current feed of the stator (39).

**21.** Electric motor, comprising:

a stator (39),
an outer rotor (40), which outer rotor (49) has a sensor magnet (54) having a plurality SP of sensor poles (55) and a rotor magnet (50) having a plurality RP of rotor poles, being in interaction with the stator (39), wherein RP is smaller than SP, and wherein the number SP of the sensor poles applies to:

$$SP = (2n - 1) * RP \text{ with } n = 2, 3, 4, \ldots,$$

at least one rotor-position sensor (42, 44) for generating a rotor-position signal (140, 142),
a rotor-position evaluation device (100) for generating an absolute value for the rotor-position, which has an A/D converter (144) having a resolution of at least 2 Bit,
wherein the at least one rotor-position sensor (42, 44) is connected to the A/D converter (144),

**22.** Electric motor according to claim 21,
wherein the at least one rotor-position sensor (42, 44) is formed as analog rotor-position sensor.

**23.** Electric motor according to claim 21 or 22,
wherein the rotor-position evaluation device (100) is formed as absolute value sensor (100) for the rotor-position, which is capable of displaying the position of the rotor at any time using an evaluation of the rotor-position signal.

**24.** Electric motor according to one of the claims 21 to 23,
wherein the A/D converter (144) has a resolution of at least 4 Bit.

**25.** Electric motor according to one of the claims 21 to 24,
wherein the A/D converter (144) has an resolution of at least 8 Bit.

**26.** Electric motor according to claims 21 to 25,
having a microprocessor (100) forming at least a part of the rotor-position evaluation device (100).

**27.** Electric motor according to one of the claims 21 to 26,
wherein the at least one rotor-position sensor (42, 44) is disposed at the radially inner side of the sensor magnet (54).

**28.** Electric motor according to one of the claims 21 to 27,
which has two rotor-position sensors (42, 44) disposed in a distance of n * 180° el- + 90° el. with n = 0, 1, 2, 3, 4, ....

**29.** Electric motor according to one of the claims 21 to 28, wherein the sensor magnet has a sensor pole number SP >= 10.

**30.** Electric motor according to one of the claims 21 to 29, wherein the rotor magnet (50) has a trapezoidal magnetization.

**31.** Electric motor according to one of the claims 21 to 30,
wherein the outer rotor (40) has a non-magnetized region (52) between the rotor magnet (50) and the sensor magnet (54).

**32.** Electric motor according to one of the claims 21 to 31, wherein n is higher or equal to 3.

**33.** Electric motor according to one of the claims 21 to 32, wherein n is higher or equal to 4.

**34.** Electric motor according to one of the claims 21 to 33,
wherein the outer rotor is formed such that the sensor magnet (54) has also a change of the magnetic field direction at angular positions at which the rotor magnet (50) has a change of the magnetic field direction.

**35.** Electric motor according to claim 34,

wherein at these angular positions the change of the magnetic field direction occurs both with the sensor magnet (54) and with the rotor magnet (50) in the same direction.

36. Electric motor according to one of the claims 21 to 35,
    wherein the rotor magnet (50) and the sensor magnet (54) are formed integrally.

**Revendications**

1. Procédé de fonctionnement d'un moteur électrique, lequel présente :

   un stator (39),
   un rotor externe (40), lequel rotor externe (40) présente un aimant de détection (54) avec une pluralité SP de pôles de détection (55) et un aimant de rotor (50) interagissant avec le stator (39) avec une pluralité RP de pôles de rotor, dans lequel RP < SP, et dans lequel pour le nombre SP de pôles de détection :

$$SP = (2n - 1) * RP \text{ avec } n = 2, 3, 4, …,$$

   au moins un capteur de position de rotor (42, 44) relié au stator et un dispositif d'évaluation de position de rotor (100),
   lequel procédé présente les étapes suivantes :

   A) au moins un signal de position de rotor dépendant de la position de rotation de l'aimant de détection (54) est généré avec l'au moins un capteur de position de rotor (100) ;
   B) l'au moins un signal de position de rotor est amené au dispositif d'évaluation de position de rotor (100) ;
   C) l'au moins un signal de position de rotor est converti dans le dispositif d'évaluation de position de rotor (100) en au moins une valeur numérique avec une résolution d'au moins 2 bits, moyennant quoi l'au moins un signal de position de rotor peut être converti même dans le cas de positions de rotation à l'intérieur de la plage angulaire d'un pôle de capteur en différentes valeurs numériques.

2. Procédé selon la revendication 1,
   dans lequel l'au moins un signal de position de rotor est généré en tant que signal de position de rotor analogique.

3. Procédé selon la revendication 1 ou 2,
   dans lequel l'au moins un signal de position de rotor est converti dans le dispositif d'évaluation de position de rotor (100) en au moins une valeur numérique avec une résolution d'au moins 4 bits.

4. Procédé selon l'une quelconque des revendications précédentes,
   dans lequel l'au moins un signal de position de rotor est converti dans le dispositif d'évaluation de position de rotor (100) en au moins une valeur numérique avec une résolution d'au moins 8 bits.

5. Procédé selon l'une quelconque des revendications précédentes,
   lequel présente en outre l'étape suivante :
   A1) l'étape A est effectuée en permanence.

6. Procédé selon l'une quelconque des revendications précédentes,
   lequel présente en outre l'étape suivante :
   B1) l'étape B est effectuée en permanence.

7. Procédé selon l'une quelconque des revendications précédentes,
   lequel présente en outre l'étape suivante :
   C1) l'étape C) est répétée à des intervalles de temps.

8. Procédé selon la revendication 8,
   lequel présente en outre l'étape suivante :
   C2) l'étape C) est répétée à des intervalles de temps fixes.

**9.** Procédé selon l'une quelconque des revendications 7 ou 8,
lequel présente en outre l'étape suivante :
C3) l'au moins une valeur numérique est convertie en une valeur à l'intérieur d'une plage de valeurs prédéfinie.

**10.** Procédé selon la revendication 9,
lequel présente en outre l'étape suivante :
C4) pour la normalisation à partir de l'étape C3), au moins une valeur de correction est déterminée et enregistrée respectivement dans un tour précédent du rotor externe 40.

**11.** Procédé selon la revendication 10,
lequel présente en outre l'étape suivante :
C5) dans l'étape C4), une valeur moyenne est formée à partir de la valeur de correction actuelle et d'au moins une valeur de correction précédente.

**12.** Procédé selon l'une quelconque des revendications précédentes,
lequel présente en outre l'étape suivante :
D) la position de rotation du rotor externe (40) est calculée à partir de l'au moins une valeur numérique.

**13.** Procédé selon la revendication 12,
lequel présente en outre l'étape suivante :
D1) dans l'étape D), le nombre de périodes, qu'a passé au moins un des signaux de position de rotor, est déterminé au moyen de l'au moins une valeur numérique.

**14.** Procédé selon la revendication 13,
lequel présente en outre l'étape suivante :
D2) dans l'étape D1), le nombre de périodes est réinitialisé à une valeur prédéfinie après la saisie d'un nombre prédéfini de périodes.

**15.** Procédé selon la revendication 13 ou 14,
lequel présente en outre l'étape suivante :
D3) la position de rotation du rotor externe (40) est calculée au moyen du nombre déterminé de périodes et de l'au moins une valeur numérique.

**16.** Procédé selon l'une quelconque des revendications 12 à 15 pour un moteur électrique, auquel aimant de détection, deux capteurs de position de rotor (42, 44) sont affectés,
lequel présente en outre l'étape suivante :
D4) dans l'étape D), les valeurs numérisées des deux capteurs de position de rotor sont utilisées pour le calcul de la position de rotation du rotor externe (40).

**17.** Procédé selon l'une quelconque des revendications 12 à 16,
lequel présente en outre l'étape suivante :
E) la vitesse de rotation du rotor externe est déterminée à partir de la position de rotation calculée du rotor externe à un premier moment et de la position de rotation calculée du rotor externe à un deuxième moment.

**18.** Procédé selon l'une quelconque des revendications précédentes,
lequel présente en outre l'étape suivante :
F) le sens de rotation du rotor externe (40) est déterminé à partir de la modification temporelle de l'au moins une valeur numérique.

**19.** Procédé selon l'une quelconque des revendications précédentes,
lequel présente en outre l'étape suivante :
G) au démarrage du moteur électrique, le rotor externe (40) est amené dans une position initiale définie.

**20.** Procédé selon la revendication 19, dans lequel le rotor externe (40) est amené au démarrage par une alimentation en courant du stator (39) dans la position initiale définie.

**21.** Moteur électrique, lequel présente :

EP 1 579 564 B1

un stator (39),
un rotor externe (40),
lequel rotor externe (40) présente un aimant de détection (54) avec une pluralité SP de pôles de détection (55) et un aimant de rotor (50) interagissant avec le stator (39) avec une pluralité RP de pôles de rotor, dans lequel RP < SP, et dans lequel pour le nombre SP de pôles de détection :

$$SP = (2n - 1) * RP \text{ avec } n = 2, 3, 4, ...,$$

au moins un capteur de position de rotor (42, 44) pour la génération d'un signal de position de rotor (140, 142), un dispositif d'évaluation de position de rotor (100) pour la génération d'une valeur absolue pour la position de rotor, lequel présente un convertisseur A/N (144) avec une résolution d'au moins 2 bits, dans lequel l'au moins un capteur de position de rotor (42, 44) est relié au convertisseur A/N (144).

22. Moteur électrique selon la revendication 21,
dans lequel l'au moins un capteur de position de rotor (42, 44) est réalisé en tant que capteur de position de rotor analogique.

23. Moteur électrique selon la revendication 21 ou 22,
dans lequel le dispositif d'évaluation de position de rotor (100) est réalisé en tant que codeur absolu (100) pour la position de rotor, lequel peut afficher la position du rotor à tout moment par une évaluation du signal de position de rotor.

24. Moteur électrique selon l'une quelconque des revendications 21 à 23,
dans lequel le convertisseur A/N (144) présente une résolution d'au moins 4 bits.

25. Moteur électrique selon l'une quelconque des revendications 21 à 24,
dans lequel le convertisseur A/N (144) présente une résolution d'au moins 8 bits.

26. Moteur électrique selon l'une quelconque des revendications 21 à 25,
avec un microprocesseur (100), lequel forme une partie du dispositif d'évaluation de position de rotor (100).

27. Moteur électrique selon l'une quelconque des revendications 21 à 26,
dans lequel l'au moins un capteur de position de rotor (42, 44) est agencé sur le côté radialement intérieur de l'aimant de détection (54).

28. Moteur électrique selon l'une quelconque des revendications 21 à 27,
lequel présente deux capteurs de position de rotor (42, 44), lesquels sont agencés à une distance de n * 180° el. + 90° el. avec n = 0, 1, 2, 3, 4, ....

29. Moteur électrique selon l'une quelconque des revendications 21 à 28, dans lequel l'aimant de détection présente un nombre de pôles de détection SP >= 10.

30. Moteur électrique selon l'une quelconque des revendications 21 à 29, dans lequel l'aimant de rotor (50) présente une magnétisation trapézoïdale.

31. Moteur électrique selon l'une quelconque des revendications 21 à 30,
dans lequel le rotor externe (40) présente une zone non magnétisée (52) entre l'aimant de rotor (50) et l'aimant de détection (54).

32. Moteur électrique selon l'une quelconque des revendications 21 à 31, dans lequel n >= 3.

33. Moteur électrique selon l'une quelconque des revendications 21 à 32, dans lequel n >= 4.

34. Moteur électrique selon l'une quelconque des revendications 21 à 33,
dans lequel le rotor externe est réalisé de telle sorte que l'aimant de détection (54) présente aux positions angulaires,

18

auxquelles l'aimant de rotor (50) présente un changement de la direction de champ magnétique, également un changement de la direction du champ magnétique.

35. Moteur électrique selon la revendication 34,
dans lequel au niveau de ses positions angulaires, le changement de la direction de champ magnétique a lieu dans la même direction aussi bien pour l'aimant de détection (54) que pour l'aimant de rotor (50).

36. Moteur électrique selon l'une quelconque des revendications 21 à 35,
dans lequel l'aimant de rotor (50) et l'aimant de détection (54) sont réalisés d'un seul tenant.

Fig. 1

Fig. 2

Fig. 3

Fig. 4

*Fig. 5*

phi_mech = 360° mech. = 2 * phi_motor

phi_motor = 360° el. = 7 * phi_sensor          phi_motor = 360° el.

phi_sensor = 90° el.(sensor)

phi_sensor = 360° el.(sensor)
phi_motor = 360° el./7 = 51,43° el.
phi_mech = 360° mech./14 = 25,71° mech.

*Fig. 6*

Fig.7

Fig. 8

Fig.9

22

Fig. 10

Fig. 11

46''

phi_mech.

0°          360°

*Fig.12*

PER

phi_mech.

0°          360°

*Fig. 13*

Fig. 14

sin(phi_sensor)

46

0° 360°

phi_sensor

cos(phi_sensor)

48

0° 360°

phi_sensor

phi_el = arctan(sin(phi_sensor)/cos(phi_sensor))

360° phi_el

0°

0° 360°

phi_sensor

*Fig. 15*

360°el.sensor

0°el.sensor

phi_el

phi_mech.

0°mech.

360°mech.

Fig. 16

360°

0°

phi_calc
(PHI)

phi_mech.

0°mech.

360° mech.

Fig. 17

Fig. 18

Fig. 19

S300

MV-Interrupt

S352

MV_SIN := A/D(SIN_SIG)
MV_COS := A/D(COS_SIG)

S354

t_MV_OLD := t_MV
t_MV := TIMER1

S356

DO_CALC_MV_N := 1

S358

RETURN
INTERRUPT

Fig. 20

S307

CALC_MV_N

S360

MV_N_SIN_OLD := MV_N_SIN
MV_N_COS_OLD := MV_N_COS

S362

MV_N_SIN := (MV_SIN - MIN_SIN(PER)) * ZOOM_SIN(PER)
MV_N_COS := (MV_COS - MIN_COS(PER)) * ZOOM_COS(PER)

S364

DO_CALC_PER := 1

S366

DO_CALC_MV_N := 0

S368

RETURN

Fig. 21

Fig. 22

S315

SET_MAX/MIN

S420

MV_SIN >
MAX_SIN(PER)?

Y → MAX_SIN(PER)
:= MV_SIN   S422

N

S424

MV_SIN <
MIN_SIN(PER)?

Y → MIN_SIN(PER)
:= MV_SIN   S426

N

S428

MV_COS >
MAX_COS(PER)?

Y → MAX_COS(PER)
:= MV_COS   S430

N

S432

MV_COS <
MIN_COS(PER)?

Y → MIN_COS(PER)
:= MV_COS   S434

N

DO_CALC_PHI := 1   S436

DO_SET_MAX/MIN := 0   S440

RETURN   S446

Fig. 23

Fig. 24

COMMUT — S323

PHI < 30°? — S470 — Y → COMM := 1 — S471

N

PHI < 60°? — S472 — Y → COMM := 3 — S473

N

PHI < 90°? — S474 — Y → COMM := 2 — S475

N

PHI < 120°? — S476 — Y → COMM := 6 — S477

N

PHI < 150°? — S478 — Y → COMM := 4 — S479

N

PHI < 180°? — S480 — Y → COMM := 5 — S481

N

PHI < 210°? — S482 — Y → COMM := 1 — S483

N

PHI < 240°? — S484 — Y → COMM := 3 — S485

N

PHI < 270°? — S486 — Y → COMM := 2 — S487

N

PHI < 300°? — S488 — Y → COMM := 6 — S489

N

PHI < 330°? — S490 — Y → COMM := 4 — S491

N

PHI < 360°? — S492 — Y → COMM := 5 — S493

N

DO_COMMUT := 0 — S494

RETURN — S496

Fig. 25

**Fig. 26**

CALC_n — S327

n := 60/360° * (PHI-PHI_OLD)/(t_MV-t_MV_OLD) — S500

DO_RGL := 1 — S502

DO_CALC_n := 0 — S504

RETURN — S506

Fig. 27

Fig. 28

Fig. 29

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020064063 A1
- US 6400109 B1